# FASCICULE DE BREVET EUROPEEN

(11) **EP 4 442 953 B1**
(45) Date de publication et mention de la délivrance du brevet: **21.01.2026**
(21) Numéro de dépôt: 24166696.5
(22) Date de dépôt: 27.03.2024
(51) Int. Cl.: E06B 9/17, E06B 9/42, H01M 50/213

(54) **DISPOSITIF D'OCCULTATION**
VERDUNKELUNGSVORRICHTUNG
DARKENING DEVICE

(30) Priorité: 28.03.2023 FR 2302949
(43) Date de publication de la demande: 09.10.2024
(73) Titulaire: SIMU, 70100 Arc-lès-Gray (FR)
(72) Inventeur: PENEY, Clément, 70000 ECHENOZ LE SEC (FR); MONTAGNON, Pierre-Michel, 70700 ANGIREY (FR)
(74) Mandataire: Lavoix

(56) Documents cités:
- EP-A1- 3 528 310
- US-A1- 2014 231 032

## Description

La présente invention concerne un dispositif d'occultation.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

On connaît déjà des dispositifs d'occultation comprenant un coffre, un écran, un tube d'enroulement et un dispositif de stockage d'énergie électrique. L'écran est enroulable sur le tube d'enroulement. Le tube d'enroulement est disposé à l'intérieur du coffre. Le coffre comprend une paroi. La paroi du coffre comprend une surface intérieure. Le dispositif de stockage d'énergie électrique comprend une batterie et deux supports. La batterie est cylindrique et est disposée à l'intérieur du coffre. Chaque support est fixé contre la surface intérieure de la paroi du coffre, au moyen d'au moins un élément de fixation. Chaque support maintient en position la batterie à l'intérieur du coffre. La batterie comprend une pluralité d'éléments de stockage d'énergie électrique. En outre, chaque support comprend un élément de maintien.

Cependant, ces dispositifs d'occultation présentent l'inconvénient que chaque support est en surépaisseur par rapport à un volume d'enveloppe de la batterie.

Ainsi, l'encombrement du dispositif de stockage d'énergie électrique à l'intérieur du coffre n'est pas optimisé.

En outre, un tel assemblage du dispositif de stockage d'énergie électrique ne permet pas d'éloigner la batterie par rapport à l'écran, lors de l'enroulement ou lors du déroulement de celui-ci autour du tube d'enroulement à l'intérieur du coffre.

On connaît également le document EP 3 528 310 A1 qui décrit un dispositif d'occultation comprenant un coffre, un écran, un tube d'enroulement et un dispositif de stockage d'énergie électrique. L'écran est enroulable sur le tube d'enroulement. Le tube d'enroulement est disposé à l'intérieur du coffre. Le coffre comprend une paroi. La paroi comprend une surface intérieure. Le dispositif de stockage d'énergie électrique comprend une batterie et deux supports. La batterie est cylindrique et est disposée à l'intérieur du coffre. Chaque support est fixé contre la surface intérieure de la paroi du coffre, au moyen d'au moins un élément de fixation. Et chaque support maintient en position la batterie à l'intérieur du coffre. La batterie comprend une pluralité d'éléments de stockage d'énergie électrique et deux éléments d'assemblage. Chaque support comprend un élément de maintien. Chaque élément d'assemblage comprend une zone de réception. En outre, l'élément de maintien de chaque support est assemblé avec l'un des éléments d'assemblage au niveau de la zone de réception dudit élément d'assemblage.

On connaît également le document US 2014/0231032 A1 qui décrit un dispositif d'occultation comprenant un coffre, un écran, un tube d'enroulement et un dispositif de stockage d'énergie électrique. L'écran est enroulable sur le tube d'enroulement. Le tube d'enroulement est disposé à l'intérieur du coffre. Le dispositif de stockage d'énergie électrique comprend une batterie et un compartiment à l'intérieur duquel est logé la batterie. La batterie est cylindrique et est disposée à l'intérieur du coffre. La batterie comprend une pluralité d'éléments de stockage d'énergie électrique.

La présente invention a pour but de résoudre les inconvénients précités et de proposer un dispositif d'occultation permettant de monter une batterie à l'intérieur d'un coffre du dispositif d'occultation, tout en minimisant l'encombrement radial d'un dispositif de stockage d'énergie électrique à l'intérieur du coffre.

A cet égard, la présente invention vise un dispositif d'occultation comprenant au moins :
- un coffre,
- un écran,
- un tube d'enroulement, l'écran étant enroulable sur le tube d'enroulement, le tube d'enroulement étant disposé à l'intérieur du coffre, et
- un dispositif de stockage d'énergie électrique,

le coffre comprenant au moins :
   - une première paroi, la première paroi comprenant au moins une première surface intérieure,
le dispositif de stockage d'énergie électrique comprenant au moins :
   - une batterie, la batterie étant cylindrique et étant disposée à l'intérieur du coffre, et
   - deux supports, chaque support étant fixé contre la première surface intérieure de la première paroi du coffre, au moyen d'au moins un élément de fixation, et chaque support maintenant en position la batterie à l'intérieur du coffre,
la batterie comprenant au moins :
   - une pluralité d'éléments de stockage d'énergie électrique, et
   - au moins deux éléments d'assemblage, chaque élément d'assemblage comprenant au moins une première zone de réception,
chaque support comprenant au moins :
   - un élément de maintien, l'élément de maintien de chaque support étant assemblé avec l'un des éléments d'assemblage au niveau de la première zone de réception dudit élément d'assemblage.

Selon l'invention, la première zone de réception de chaque élément d'assemblage présente un diamètre extérieur inférieur à un diamètre extérieur de la batterie. L'élément de maintien de chaque support présente un diamètre intérieur inférieur au diamètre extérieur de la batterie. En outre, chaque élément d'assemblage est en appui contre au moins l'un des éléments de stockage d'énergie électrique suivant un axe longitudinal de la batterie.

Ainsi, la première zone de réception de chaque élément d'assemblage de la batterie est logée à l'intérieur de l'élément de maintien de l'un des supports, tout en garantissant que l'élément de maintien de chacun des supports ne dépasse pas ou peu par rapport à un volume d'enveloppe de la batterie, de sorte à minimiser l'encombrement radial du dispositif de stockage d'énergie électrique à l'intérieur du coffre et à éloigner la batterie par rapport à l'écran, lors de l'enroulement ou lors du déroulement de celui-ci autour du tube d'enroulement à l'intérieur du coffre.

De cette manière, l'assemblage de la première zone de réception de chacun des éléments d'assemblage de la batterie à l'intérieur de l'élément de maintien de l'un des supports permet de limiter, voire d'éviter, une surépaisseur de l'élément de maintien de chacun des supports par rapport au volume d'enveloppe de la batterie.

En outre, le dispositif de stockage d'énergie électrique peut être installé dans un coffre de dimensions plus faibles, en particulier en termes d'épaisseur et de hauteur.

Par conséquent, le faible encombrement du dispositif de stockage d'énergie électrique à l'intérieur du coffre permet, d'une part, d'éviter un contact de l'écran avec la batterie, lors de l'enroulement ou lors du déroulement de celui-ci autour du tube d'enroulement à l'intérieur du coffre, et, d'autre part, de maximiser un diamètre d'enroulement de l'écran autour du tube d'enroulement à l'intérieur du coffre.

Selon une caractéristique avantageuse de l'invention, chaque élément d'assemblage comprend au moins une deuxième zone de réception, l'un des éléments de stockage d'énergie électrique étant assemblée sur l'un des éléments d'assemblage au niveau de la deuxième zone de réception dudit élément d'assemblage.

Selon une autre caractéristique avantageuse de l'invention, la batterie comprend, en outre, au moins une gaine thermo-rétractable. En outre, chaque élément d'assemblage est maintenu avec au moins l'un des éléments de stockage d'énergie électrique au moyen de la gaine thermo-rétractable.

Selon une autre caractéristique avantageuse de l'invention, la pluralité d'éléments de stockage d'énergie électrique comprend au moins :
- un premier élément de stockage d'énergie électrique d'extrémité, le premier élément de stockage d'énergie électrique d'extrémité comprenant au moins une première face d'extrémité, la première face d'extrémité étant orientée vers l'extérieur de la batterie, et
- un deuxième élément de stockage d'énergie électrique d'extrémité, le deuxième élément de stockage d'énergie électrique d'extrémité étant opposé au premier élément de stockage d'énergie électrique d'extrémité, le deuxième élément de stockage d'énergie électrique d'extrémité comprenant au moins une première face d'extrémité, la première face d'extrémité étant orientée vers l'extérieur de la batterie.

En outre, l'un des éléments d'assemblage est en appui contre la première face d'extrémité du premier élément de stockage d'énergie électrique d'extrémité et l'autre des éléments d'assemblage est en appui contre la première face d'extrémité du deuxième élément de stockage d'énergie électrique d'extrémité.

En variante, chacun des éléments de stockage d'énergie électrique comprend une première face d'extrémité et une deuxième face d'extrémité. Chaque élément d'assemblage est disposé entre deux éléments de stockage d'énergie électrique adjacents. En outre, chaque élément d'assemblage est en appui, d'une part, contre la première face d'extrémité de l'un des éléments de stockage d'énergie électrique adjacents et, d'autre part, contre la deuxième face d'extrémité de l'autre des éléments de stockage d'énergie électrique adjacents.

Selon une autre caractéristique avantageuse de l'invention, chaque élément d'assemblage comprend au moins un élément de connexion électrique, l'élément de connexion électrique étant connecté électriquement avec les deux éléments de stockage d'énergie électrique adjacents.

Selon une autre caractéristique avantageuse de l'invention, l'élément de maintien de chaque support est un élément de fixation par encliquetage élastique.

Selon une autre caractéristique avantageuse de l'invention, le dispositif d'occultation comprend, en outre, au moins un dispositif d'entraînement motorisé. Le dispositif d'entraînement motorisé comprend au moins un actionneur électromécanique. L'actionneur électromécanique comprend au moins un moteur électrique, le moteur électrique étant alimenté en énergie électrique à partir de la batterie. En outre, le tube d'enroulement est agencé de sorte à être entraîné en rotation par l'actionneur électromécanique.

Selon une autre caractéristique avantageuse de l'invention, le dispositif d'occultation comprend, en outre, au moins un panneau photovoltaïque, la batterie étant alimentée en énergie électrique au moyen du panneau photovoltaïque.

Selon une autre caractéristique avantageuse de l'invention, dans une configuration assemblée du dispositif d'occultation, le diamètre extérieur de la première zone de réception de chaque élément d'assemblage et le diamètre intérieur de l'élément de maintien de chaque support est centré sur l'axe longitudinal de la batterie.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en coupe transversale d'une installation conforme à un premier mode de réalisation de l'invention, l'installation comprenant un dispositif d'occultation conforme à l'invention ;
[Fig 2] la figure 2 est une vue schématique en perspective de l'installation illustrée à la figure 1 ;
[Fig 3] la figure 3 est une vue schématique en coupe axiale et partielle de l'installation illustrée aux figures 1 et 2, montrant un actionneur électromécanique d'un dispositif d'entraînement motorisé du dispositif d'occultation de l'installation ;

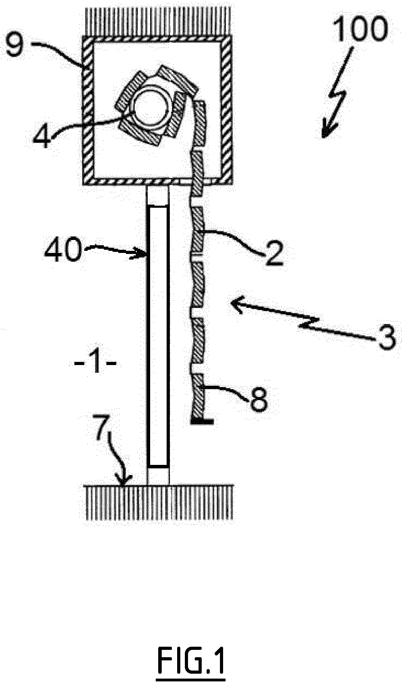

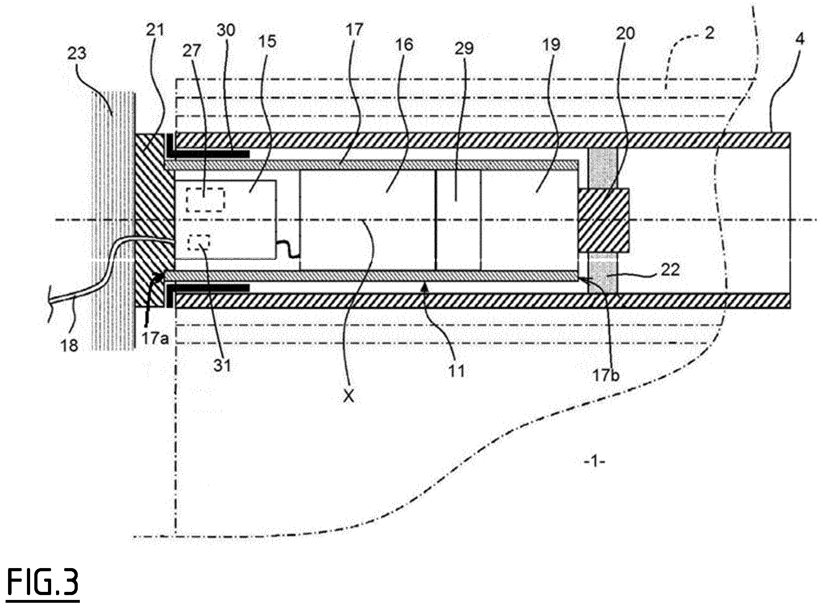

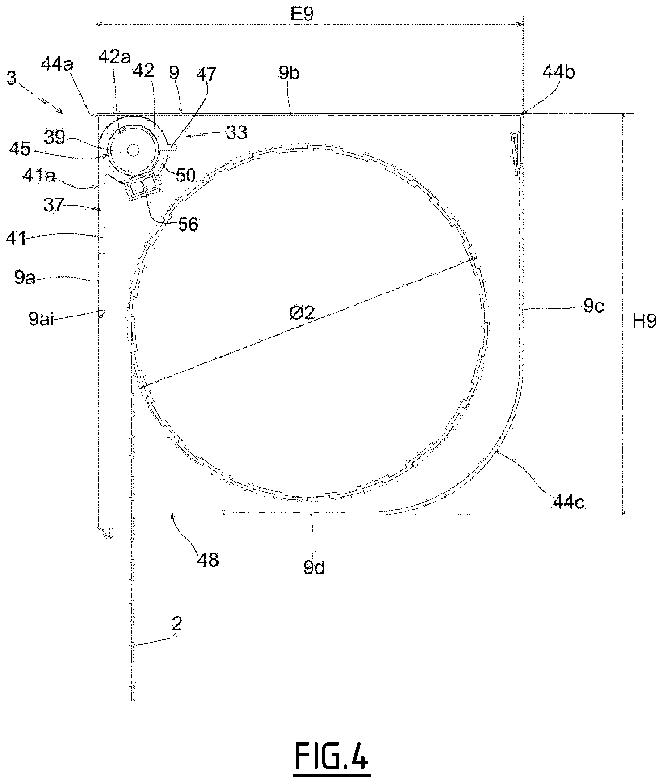

[Fig 4] la figure 4 est une vue schématique en coupe transversale, selon un plan de coupe perpendiculaire au plan de coupe de la figure 3, d'une partie de l'installation illustrée aux figures 1 à 3, montrant un coffre et un écran du dispositif d'occultation, ainsi qu'un dispositif de stockage d'énergie électrique comprenant une batterie et un support de montage de la batterie à l'intérieur du coffre, où l'écran est représenté de sorte à illustrer son plus grand diamètre d'enroulement autour d'un tube d'enroulement à l'intérieur du coffre, et où le tube d'enroulement et une partie de l'écran ont été omis pour faciliter la lecture de cette figure ;
[Fig 5] la figure 5 est une première vue schématique en perspective du dispositif de stockage d'énergie électrique illustré à la figure 4 comprenant deux supports et deux éléments d'assemblage ;
[Fig 6] la figure 6 est une deuxième vue schématique en perspective du dispositif de stockage d'énergie électrique illustré aux figures 4 et 5, où une gaine thermo-rétractable a été retirée ;
[Fig 7] la figure 7 est une vue schématique en coupe d'une partie du dispositif de stockage d'énergie électrique illustré aux figures 4 à 6 ;
[Fig 8] la figure 8 est une vue schématique en perspective de l'un des éléments d'assemblage illustré aux figures 5 à 7 ;
[Fig 9] la figure 9 est une vue analogue à la figure 4 d'une partie d'une installation conforme à un deuxième mode de réalisation de l'invention ;
[Fig 10] la figure 10 est une vue analogue à la figure 5 du dispositif de stockage d'énergie électrique illustré à la figure 9 ;
[Fig 11] la figure 11 est une vue analogue à la figure 6 du dispositif de stockage d'énergie électrique illustré aux figures 9 et 10 ;
[Fig 12] la figure 12 est une vue analogue à la figure 7 d'une partie du dispositif de stockage d'énergie électrique illustré aux figures 9 à 11 ; et
[Fig 13] la figure 13 est une vue analogue à la figure 8 de l'un des éléments d'assemblage illustré aux figures 9 à 12.

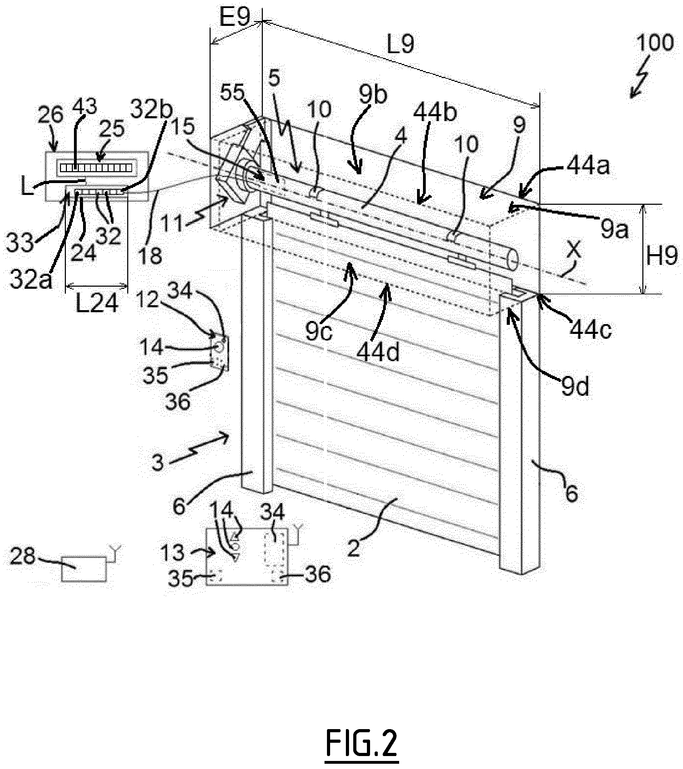

On décrit tout d'abord, en référence aux figures 1 et 2, une installation domotique 100 conforme à de l'invention. Cette installation domotique 100 comprend au moins un dispositif de fermeture, d'occultation ou de protection solaire 3, conforme à un premier mode de réalisation l'invention. Cette installation domotique 100, installée dans un bâtiment, non représenté, comporte une ouverture 1, dans laquelle est disposée une fenêtre 40 ou une porte, qui n'est représentée qu'à la figure 1. Cette installation domotique 100 est équipée d'au moins un écran 2 appartenant au dispositif de fermeture, d'occultation ou de protection solaire 3, en particulier un volet roulant motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un volet roulant, un store en toile ou avec des lames orientables, un portail roulant, une grille ou encore une porte. La présente invention s'applique à tous les types de dispositif d'occultation.

On décrit, en référence aux figures 1 et 2, un volet roulant conforme au premier mode de réalisation de l'invention.

Le dispositif d'occultation 3 comprend un dispositif d'entraînement motorisé 5. Le dispositif d'entraînement motorisé 5 comprend un actionneur électromécanique 11 illustré à la figure 3.

Le dispositif d'occultation 3 comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 11.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

L'actionneur électromécanique 11, en particulier de type tubulaire, permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux coulisses latérales 6, représentées uniquement à la figure 2. Ces lames sont jointives lorsque le tablier 2 du volet roulant 3 atteint sa position basse déroulée.

Le dispositif d'occultation 3 comprend, en outre, un coffre 9.

Dans le cas d'un volet roulant, la position haute enroulée correspond à la mise en appui d'une lame d'extrémité finale 8, par exemple en forme de L, du tablier 2 du volet roulant 3 contre un bord du coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

Ici, l'écran 2 est configuré pour être déplacé, au moyen du dispositif d'entraînement motorisé 5, entre une position ouverte, correspondant à la position enroulée et pouvant également être appelée première position de fin de course ou position de fin de course haute FdCH, et une position fermée, correspondant à la position déroulée et pouvant également être appelée deuxième position de fin de course ou position de fin de course basse FdCB.

Ainsi, l'actionneur électromécanique 11 est configuré pour entraîner, autrement dit entraîne, en déplacement l'écran 2, entre la première position de fin de course FdCH et la deuxième position de fin de course FdCB, et inversement.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment.

Le dispositif d'entraînement motorisé 5 est, de préférence, configuré pour exécuter les commandes de déroulement ou d'enroulement de l'écran 2 du dispositif d'occultation 3, pouvant être émises, notamment, par l'unité de commande locale 12 ou l'unité de commande centrale 13.

L'installation domotique 100 comprend soit l'unité de commande locale 12, soit l'unité de commande centrale 13, soit l'unité de commande locale 12 et l'unité de commande centrale 13.

On décrit à présent, plus en détail et en référence à la figure 3, le dispositif d'entraînement motorisé 5, y compris l'actionneur électromécanique 11, appartenant à l'installation domotique 100 et, plus particulièrement, au dispositif d'occultation 3 illustré aux figures 1 et 2.

Avantageusement, l'actionneur électromécanique 11 comprend un moteur électrique 16.

Le moteur électrique 16 est représenté par son enveloppe à la figure 3, sans détails sur ses éléments constitutifs internes.

Avantageusement, le moteur électrique 16 comprend un rotor et un stator, non représentés et positionnés de manière coaxiale autour de l'axe de rotation X, qui est également l'axe de rotation du tube d'enroulement 4 en configuration montée du dispositif d'entraînement motorisé 5.

Ici, le moteur électrique 16 peut être de type sans balais à commutation électronique, appelé également « BLDC » (acronyme du terme anglo-saxon BrushLess Direct Current) ou « synchrone à aimants permanents », ou du type à courant continu.

Des moyens de commande de l'actionneur électromécanique 11, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31.

Ici, le dispositif d'entraînement motorisé 5 comprend l'unité électronique de contrôle 15. En outre, l'unité électronique de contrôle 15 comprend le microcontrôleur 31.

Avantageusement, l'unité électronique de contrôle 15 comprend, en outre, un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité électronique de contrôle 15, l'unité de commande locale 12 et/ou l'unité de commande centrale 13 peuvent être en communication avec une station météorologique, non représentée, disposée à l'intérieur du bâtiment ou déportée à l'extérieur du bâtiment, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment.

Avantageusement, l'unité électronique de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 et/ou de l'unité de commande centrale 13. L'unité de commande locale 12 et/ou l'unité de commande centrale 13 est pourvue d'un clavier de commande. Le clavier de commande de l'unité de commande locale 12 ou de l'unité de commande centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur, par exemple LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou l'unité de commande centrale 13 comprend au moins un deuxième module de communication 36.

Ainsi, le deuxième module de communication 36 de l'unité de commande locale 12 ou de l'unité de commande centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou de l'unité de commande centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou de l'unité de commande centrale 13 est configuré pour communiquer, autrement dit communique, avec le premier module de communication 27 de l'unité électronique de contrôle 15.

Ainsi, le deuxième module de communication 36 de l'unité de commande locale 12 ou de l'unité de commande centrale 13 échange des ordres de commande avec le premier module de communication 27 de l'unité électronique de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade d'un mur du bâtiment ou sur une face d'un cadre dormant de la fenêtre 40 ou d'une porte. Un point de commande nomade peut être une télécommande, un téléphone intelligent ou une tablette.

Avantageusement, l'unité de commande locale 12 et/ou l'unité de commande centrale 13 comprend, en outre, un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou de l'unité de commande centrale 13.

Le dispositif d'entraînement motorisé 5 peut également être contrôlé automatiquement, par exemple par la réception d'un ordre de commande correspondant à au moins un signal provenant d'au moins un capteur, non représenté, et/ou à un signal provenant d'une horloge, non représentée, de l'unité électronique de contrôle 15, en particulier du microcontrôleur 31. En variante, le capteur et/ou l'horloge peuvent être intégrés à l'unité de commande locale 12 ou à l'unité de commande centrale 13.

Avantageusement, l'actionneur électromécanique 11 comprend, en outre, un carter 17, en particulier tubulaire. Le moteur électrique 16 est monté à l'intérieur du carter 17, en particulier dans une configuration assemblée de l'actionneur électromécanique 11.

Ici, le carter 17 de l'actionneur électromécanique 11 est de forme cylindrique, notamment de révolution autour de l'axe de rotation X.

Avantageusement, le carter 17 est un tube.

Ici, le tube formant le carter 17 présente une section circulaire.

Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

Le carter 17 est creux. Le carter 17 comprend une première extrémité 17a et une deuxième extrémité 17b. La deuxième extrémité 17b est opposée à la première extrémité 17a. Le carter 17 est ouvert à chacune de ses extrémités 17a, 17b.

Avantageusement, l'actionneur électromécanique 11 comprend, en outre, un arbre de sortie 20.

L'arbre de sortie 20 est disposé, autrement dit est configuré pour être disposé, au niveau de la deuxième extrémité 17b du carter 17, en particulier dans la configuration assemblée de l'actionneur électromécanique 11.

Avantageusement, l'actionneur électromécanique 11 comprend, en outre, un réducteur 19.

Le réducteur 19 est représenté par son enveloppe à la figure 3, sans détails sur ses éléments constitutifs internes.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs.

Le réducteur 19 est accouplé, autrement dit est configuré pour être accouplé, avec le moteur électrique 16, en particulier avec le rotor du moteur électrique 16 et dans la configuration assemblée de l'actionneur électromécanique 11.

Avantageusement, l'actionneur électromécanique 11 comprend, en outre, un frein 29.

A titre d'exemples nullement limitatifs, le frein 29 peut être un frein à ressort, un frein à came, un frein magnétique ou un frein électromagnétique.

Le frein 29 est configuré pour freiner et/ou pour bloquer en rotation l'arbre de sortie 20, de sorte à réguler la vitesse de rotation du tube d'enroulement 4, lors d'un déplacement de l'écran 2, et à maintenir bloqué le tube d'enroulement 4, lorsque l'actionneur électromécanique 11 est désactivé électriquement.

Ici et comme visible à la figure 3, le frein 29 est configuré pour être disposé, autrement dit est disposé, en particulier dans la configuration assemblée de l'actionneur électromécanique 11, entre le moteur électrique 16 et le réducteur 19, c'est-à-dire à la sortie du moteur électrique 16.

En variante, non représentée, le frein 29 est configuré pour être disposé, autrement dit est disposé, en particulier dans la configuration assemblée de l'actionneur électromécanique 11, entre l'unité électronique de contrôle 15 et le moteur électrique 16, autrement dit à l'entrée du moteur électrique 16, entre le réducteur 19 et l'arbre de sortie 20, autrement dit à la sortie du réducteur 19, ou entre deux étages de réduction du réducteur 19.

Avantageusement, le réducteur 19 et, éventuellement, le frein 29 sont disposés à l'intérieur du carter 17 de l'actionneur électromécanique 11, en particulier dans la configuration assemblée de l'actionneur électromécanique 11.

Avantageusement, l'actionneur électromécanique 11 comprend, en outre, une couronne 30, pouvant également être appelée un manchon. La couronne 30 est disposée, autrement dit est configurée pour être disposée, au niveau de la première extrémité 17a du carter 17, en particulier dans la configuration assemblée de l'actionneur électromécanique 11.

La couronne 30 constitue, autrement dit est configurée pour constituer, un palier de guidage en rotation du tube d'enroulement 4, en particulier dans une configuration assemblée du dispositif d'occultation 3.

Avantageusement, l'actionneur électromécanique 11 et, plus particulièrement, l'unité électronique de contrôle 15 comprend, en outre, un dispositif de détection d'obstacle et de fins de course, non représenté, lors de l'enroulement de l'écran 2 et lors du déroulement de cet écran 2. Le dispositif de détection d'obstacle et de fins de course peut être mécanique ou électronique.

Avantageusement, le dispositif de détection d'obstacle et de fins de course est mis en oeuvre au moyen du microcontrôleur 31 de l'unité électronique de contrôle 15 et, en particulier, au moyen d'un algorithme mis en oeuvre par ce microcontrôleur 31.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne 30 insérée autour de la première extrémité 17a du carter 17 de l'actionneur électromécanique 11. La couronne 30 permet ainsi de réaliser un palier. La deuxième liaison pivot, non représentée à la figure 3, est réalisée au niveau d'une deuxième extrémité du tube d'enroulement 4, non visible sur cette figure.

Avantageusement, l'actionneur électromécanique 11 comprend, en outre, un support de couple 21, pouvant également être appelé « tête d'actionneur » ou « point fixe ».

Le support de couple 21 obture, autrement dit est configuré pour obturer, la première extrémité 17a du carter 17, en particulier dans la configuration assemblée de l'actionneur électromécanique 11.

Ainsi, le support de couple 21 est disposé, autrement dit est configuré pour être disposé, au niveau de la première extrémité 17a du carter 17.

Avantageusement, le support de couple 21 est en saillie, au niveau de la première extrémité 17a du carter 17, en particulier la première extrémité 17a du carter 17 recevant la couronne 30.

Ainsi, une première partie du support de couple 21 est disposée à l'intérieur du carter 17 et une deuxième partie du support de couple 21 est disposée à l'extérieur du carter 17.

Avantageusement, le support de couple 21 de l'actionneur électromécanique 11 est configuré pour fixer l'actionneur électromécanique 11 sur un bâti 23, en particulier à une joue du coffre 9.

Ainsi, le support de couple 21 permet de reprendre les efforts exercés par l'actionneur électromécanique 11, en particulier le couple exercé par l'actionneur électromécanique 11, par rapport à la structure du bâtiment. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment.

Le support de couple 21 est fixé, autrement dit est configuré pour être fixé, au carter 17 au moyen d'un ou plusieurs éléments de fixation, en particulier dans la configuration assemblée de l'actionneur électromécanique 11. Le ou les éléments de fixation peuvent être, notamment, des bossages, des vis de fixation, des éléments de fixation par encliquetage élastique, des nervures emmanchées dans des échancrures ou une combinaison de ces différents éléments de fixation.

Par ailleurs, le support de couple 21 de l'actionneur électromécanique 11 peut permettre de supporter au moins une partie de l'unité électronique de contrôle 15.

Avantageusement, l'unité électronique de contrôle 15 peut être alimentée en énergie électrique au moyen d'un câble d'alimentation électrique 18.

Ici et tel qu'illustré à la figure 3, l'unité électronique de contrôle 15 est disposée, autrement dit est intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le coffre 9 ou dans le support de couple 21.

Avantageusement, le support de couple 21 peut comprendre au moins un bouton, non représenté.

Ce ou ces boutons peuvent permettre de réaliser un réglage de l'actionneur électromécanique 11 au travers d'un ou plusieurs modes de configuration, d'appairer avec l'actionneur électromécanique 11 une ou plusieurs unités de commande 12, 13, de réinitialiser un ou plusieurs paramètres, pouvant être, par exemple, une position de fin de course, de réinitialiser la ou les unités de commande 12, 13 appairées ou encore de commander le déplacement de l'écran 2.

Avantageusement, le support de couple 21 peut comprendre au moins un dispositif d'affichage, non représenté, de sorte à permettre une indication visuelle d'un paramètre de fonctionnement du dispositif d'entraînement motorisé 5.

Avantageusement, le dispositif d'affichage comprend au moins une source d'éclairage, non représentée, en particulier une diode électroluminescente.

Cette ou ces sources d'éclairage sont montées sur une carte électronique de l'unité électronique de contrôle 15 et, éventuellement, un capot transparent ou translucide et/ou un guide de lumière est ou sont prévus, pour permettre le passage de la lumière émise par la ou chacune des sources d'éclairage.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à la deuxième extrémité 17b du carter 17 opposée à la première extrémité 17a.

Avantageusement, l'arbre de sortie 20 de l'actionneur électromécanique 11 est configuré pour entraîner en rotation un élément de liaison 22. Cet élément de liaison 22 est relié au tube d'enroulement 4, en particulier dans la configuration assemblée du dispositif d'occultation 3. L'élément de liaison 22 est, par exemple, réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

Avantageusement, le dispositif d'occultation 3 et, plus particulièrement, le dispositif d'entraînement motorisé 5 comprend, en outre, un dispositif d'alimentation en énergie électrique 26, visible à la figure 2. L'actionneur électromécanique 11 est relié électriquement au dispositif d'alimentation en énergie électrique 26.

Le dispositif d'occultation 3 et, plus particulièrement, le dispositif d'alimentation en énergie électrique 26 comprend au moins un dispositif de stockage d'énergie électrique 33.

Le dispositif de stockage d'énergie électrique 33 comprend au moins une batterie 24.

Avantageusement, le dispositif d'occultation 3 et, plus particulièrement, le dispositif d'alimentation en énergie électrique 26 comprend, en outre, au moins un panneau photovoltaïque 25.

Dans ce cas, la batterie 24 est de type rechargeable.

Le dispositif d'alimentation en énergie électrique 26 et, plus particulièrement, la batterie 24 est configuré pour alimenter, autrement dit alimente, en énergie électrique l'actionneur électromécanique 11 et, plus particulièrement, l'unité électronique de contrôle 15 et le moteur électrique 16.

Ainsi, le dispositif d'alimentation en énergie électrique 26 et, plus particulièrement, la batterie 24 permet d'alimenter en énergie électrique l'actionneur électromécanique 11, sans être lui-même relié électriquement à un réseau d'alimentation électrique du secteur.

Ici, le panneau photovoltaïque 25 est relié électriquement à la batterie 24, par une liaison électrique L.

L'actionneur électromécanique 11 est relié électriquement au dispositif d'alimentation en énergie électrique 26 et, plus particulièrement, à la batterie 24, en particulier au moyen du câble d'alimentation électrique 18.

La batterie 24 est configurée pour alimenter, autrement dit alimente, en énergie électrique l'actionneur électromécanique 11, en particulier l'unité électronique de contrôle 15 et le moteur électrique 16. En outre, la batterie 24 est configurée pour être alimentée, autrement dit est alimentée, en énergie électrique par le panneau photovoltaïque 25.

Ainsi, le rechargement de la batterie 24 est mis en oeuvre par énergie solaire, au moyen du panneau photovoltaïque 25.

La batterie 24 est disposée à l'intérieur du coffre 9.

A la figure 2, la batterie 24 est représentée à l'extérieur du coffre 9 afin de mieux visualiser les composants du dispositif d'alimentation en énergie électrique 26. Ceci est indépendant de la localisation de la batterie 24 à l'intérieur du coffre 9.

Lorsque le support de couple 21 comprend un dispositif d'affichage, le paramètre de fonctionnement que ce dispositif d'affichage permet de visualiser est avantageusement un état de charge de la batterie 24.

Ici, l'actionneur électromécanique 11 comprend le câble d'alimentation électrique 18 permettant son alimentation en énergie électrique, notamment l'alimentation électrique de l'unité électronique de contrôle 15 et l'alimentation électrique du moteur électrique 16, en particulier à partir de la batterie 24.

Ici, la batterie 24 est reliée électriquement directement à l'unité électronique de contrôle 15, par le câble d'alimentation électrique 18.

Avantageusement, la batterie 24 comprend une pluralité d'éléments de stockage d'énergie 32, 32a, 32b, en particulier reliés électriquement en série. Les éléments de stockage d'énergie 32, 32a, 32b de la batterie 24 peuvent être, notamment des accumulateurs ou des piles.

Avantageusement, le panneau photovoltaïque 25 comprend une pluralité de cellules photovoltaïques 43. Dans ce cas, la batterie 24 est alimentée en énergie électrique au moyen des cellules photovoltaïques 43 du panneau photovoltaïque 25.

Le dispositif d'entraînement motorisé 5, en particulier le panneau photovoltaïque 25 et/ou l'unité électronique de contrôle 15, comprend des éléments de chargement configurés pour charger la batterie 24, à partir de l'énergie solaire récupérée par le panneau photovoltaïque 25. Dans ce cas, le courant circule entre les organes 15, 24 et 25 à travers une liaison filaire, qui peut être distincte du câble d'alimentation en énergie électrique 18.

Ainsi, les éléments de chargement configurés pour charger la batterie 24, à partir de l'énergie solaire, permettent de convertir l'énergie solaire récupérée par le panneau photovoltaïque 25 en énergie électrique.

En variante, en complément, le dispositif d'entraînement motorisé 5, en particulier l'actionneur électromécanique 11, est alimenté en énergie électrique à partir d'une batterie auxiliaire, non représentée, ou à partir d'un réseau d'alimentation électrique du secteur, en particulier par le réseau alternatif commercial, notamment en fonction d'un état de charge de la batterie 24.

Ici, l'unité électronique de contrôle 15 comprend une seule carte électronique 55. En outre, la carte électronique 55 est configurée pour contrôler le moteur électrique 16, pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Comme mentionné ci-dessus, les éléments de chargement de la batterie 24 peuvent être disposés au niveau de la carte électronique 55.

En variante, non représentée, l'unité électronique de contrôle 15 comprend une première carte électronique et une deuxième carte électronique. La première carte électronique est configurée pour contrôler, autrement dit contrôle, le moteur électrique 16. En outre, la deuxième carte électronique est configurée pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Les éléments de chargement de la batterie 24 peuvent être disposés au niveau de la deuxième carte électronique. Dans le cas où l'unité électronique de contrôle 15 comprend une première carte électronique et une deuxième carte électronique, non représentées, la première carte électronique de l'unité électronique de contrôle 15 peut être disposée à l'intérieur du carter 17 de l'actionneur électromécanique 11. En outre, la deuxième carte électronique peut être disposée à l'intérieur du support de couple 21 de l'actionneur électromécanique 11. Par ailleurs, le support de couple 21 peut comprendre un couvercle, non représenté. En outre, la deuxième carte électronique peut être disposée à l'intérieur d'un logement formé entre une partie du support de couple 21 et le couvercle.

Avantageusement, le panneau photovoltaïque 25 peut être fixé sur le coffre 9, sur un mur du bâtiment, sur l'une des coulisses latérales 6, sur une vitre de la fenêtre 40 ou sur un cadre dormant de la fenêtre 40.

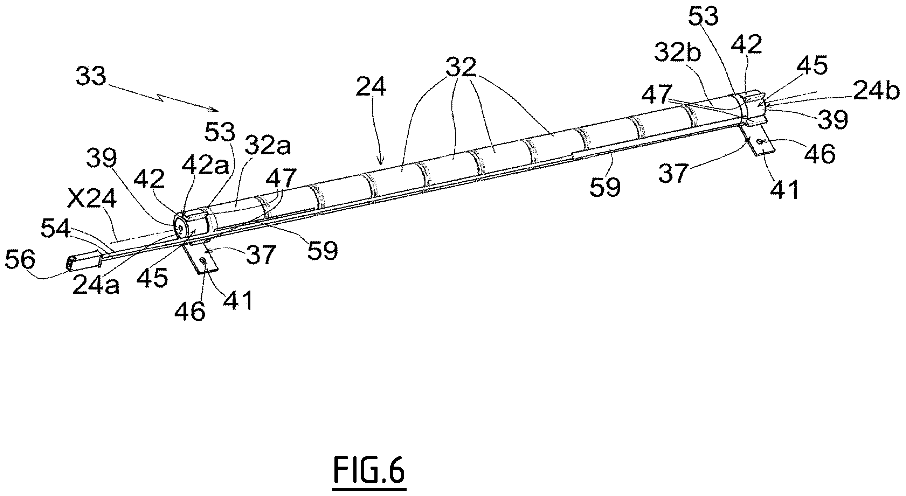

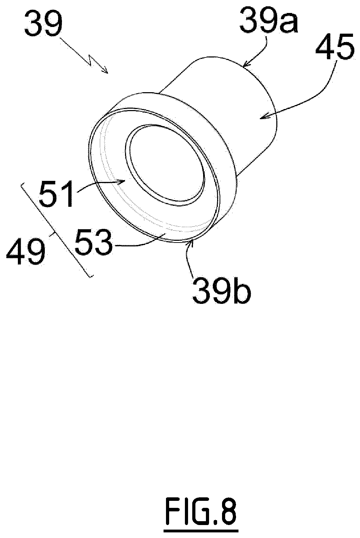

On décrit à présent, plus en détail et en référence aux figures 4 à 8, le dispositif de stockage d'énergie électrique 33 appartenant au dispositif d'occultation 3 illustré aux figures 1 et 2 et conforme au premier mode réalisation de l'invention, ainsi que le montage de la batterie 24 à l'intérieur du coffre 9.

Le coffre 9 comprend au moins une première paroi 9a. La première paroi 9a comprend au moins une première surface intérieure 9ai.

Avantageusement, le coffre 9 comprend une deuxième paroi 9b, une troisième paroi 9c et une quatrième paroi 9d. En outre, les première, deuxième, troisième et quatrième parois 9a, 9b, 9c, 9d du coffre 9 sont reliées entre elles, autrement dit sont configurées pour être reliées entre elles, en particulier dans la configuration assemblée du dispositif d'occultation 3, soit par des éléments de fixation, non représentés, pouvant être, par exemple, des éléments de fixation par emboîtement, par encliquetage élastique, par rivetage ou par vissage, soit parce qu'elles appartiennent à une même bande de tôle ou forment une pièce unique, notamment en matière plastique.

Avantageusement, le coffre 9 présente une ouverture 48 pour le passage de l'écran 2 lors de l'enroulement et lors du déroulement de ce dernier autour du tube d'enroulement 4, comme illustré à la figure 4.

Ici et comme illustré à la figure 2, le coffre 9 est de forme parallélépipédique et présente quatre angles 44a, 44b, 44c, 44d, dont un angle supérieur droit 44a, un angle supérieur gauche 44b, un angle inférieur droit 44c et un angle inférieur gauche 44d.

En variante et comme illustré à la figure 4, le coffre 9 est de forme parallélépipédique et présente trois angles 44a, 44b, 44c, dont un angle supérieur gauche 44a, un angle supérieur droit 44b et un angle inférieur droit 44c. L'angle inférieur droit 44c présente un rayon de courbure élevé pour relier les troisième et quatrième parois 9c, 9d du coffre 9. Dans ce cas, le coffre 9 est dépourvu d'un angle inférieur gauche 44d, étant donné que la première paroi 9a et la quatrième paroi 9d ne sont pas jointives, de sorte à former l'ouverture 48.

Avantageusement, le coffre 9 est défini par une longueur L9, une hauteur H9 et une épaisseur E9, autrement dit une profondeur.

Le dispositif de stockage d'énergie électrique 33 comprend, en outre, au moins deux supports 37. D'une part, chaque support 37 est fixé contre la première surface intérieure 9ai de la première paroi 9a du coffre 9, au moyen d'au moins un élément de fixation, non représenté. Et, d'autre part, chaque support 37 maintient en position la batterie 24 à l'intérieur du coffre 9.

Ici, les deux supports 37 sont identiques. La description suivante d'un support s'applique à l'un ou l'autre de ces deux supports 37.

Chaque support 37 comprend au moins un élément de maintien 42.

Avantageusement, chaque support 37 comprend, en outre, un bras 41. Le bras 41 comprend au moins une première surface 41a. La première surface 41a est configurée pour être mise en appui, autrement dit est mise en appui, contre la première surface intérieure 9ai de la première paroi 9a du coffre 9, en particulier dans la configuration assemblée du dispositif d'occultation 3.

Avantageusement, l'élément de maintien 42 est relié au bras 41. La batterie 24 comprend une surface extérieure 24e. L'élément de maintien 42 comprend au moins une deuxième surface 42a. La deuxième surface 42a est configurée pour être mise en appui, autrement dit est mise en appui, contre la surface extérieure 24e de la batterie 24, en particulier dans la configuration assemblée du dispositif d'occultation 3. En outre, la deuxième surface 42a est incurvée, autrement dit présente une concavité.

Ici, la concavité de la deuxième surface 42a est orientée vers la batterie 24, en particulier dans la configuration assemblée du dispositif d'occultation 3.

Ici, l'élément de maintien 42 et le bras 41 de chaque support 37 ne forment qu'une seule pièce. Autrement dit, chaque support 37 est une pièce monobloc constituée de l'élément de maintien 42 et du bras 41.

En variante, non représentée, l'élément de maintien 42 et le bras 41 de chaque support 37 sont deux pièces distinctes assemblées entre elles au moyen d'au moins un élément de fixation, pouvant être, par exemple, par encliquetage élastique, par emboîtement ou par vissage.

La batterie 24 comprend, en outre, au moins deux éléments d'assemblage 39.

Ici, les deux éléments d'assemblage 39 sont identiques. La description suivante d'un élément d'assemblage s'applique à l'un ou l'autre de ces deux éléments d'assemblage 39.

Chaque élément d'assemblage 39 est en appui, autrement dit est configuré pour être en appui, contre au moins l'un des éléments de stockage d'énergie électrique 32, 32a, 32b, en l'occurrence l'un des éléments de stockage d'énergie électrique d'extrémité 32a, 32b dans ce premier mode de réalisation de l'invention, en particulier dans une configuration assemblée de la batterie 24, suivant un axe longitudinal X24 de la batterie 24.

Chaque élément d'assemblage 39 comprend au moins une première zone de réception 45. En outre, l'élément de maintien 42 de chaque support 37 est assemblé, autrement dit est configuré pour être assemblé, avec l'un des éléments d'assemblage 39 au niveau de la première zone de réception 45 de l'élément d'assemblage 39 concerné, en particulier dans une configuration assemblée du dispositif de stockage d'énergie électrique 33.

Ainsi, la première zone de réception 45 de l'un des éléments d'assemblage 39 est configurée pour recevoir en appui, autrement dit reçoit en appui, un élément de maintien 42 de l'un des supports 37.

Ici, la batterie 24, en particulier les éléments de stockage d'énergie électrique 32, 32a, 32b, est centrée sur l'axe longitudinal X24. En outre, dans la configuration assemblée du dispositif d'occultation 3, chaque élément d'assemblage 39 de la batterie 24 et l'élément de maintien 42 de chaque support 37 sont centrés sur l'axe longitudinal X24.

La batterie 24 est cylindrique, autrement dit présente une section circulaire.

Ici, la batterie 24 est définie par un diamètre extérieur Ø24ext, qui est le diamètre extérieur de sa surface extérieure 24e. Par construction, le diamètre extérieur Ø24ext est centré sur l'axe longitudinal X24.

Avantageusement, la première zone de réception 45 de chaque élément d'assemblage 39 est de forme convexe et, plus particulièrement, est cylindrique, de préférence à section circulaire.

Ici, la première zone de réception 45 de chaque élément d'assemblage 39 est définie par un diamètre extérieur Ø45ext.

Avantageusement, dans la configuration assemblée du dispositif d'occultation 3, la première zone de réception 45 de chaque élément d'assemblage 39, donc son diamètre extérieur Ø45ext, est centrée sur l'axe longitudinal X24 de la batterie 24.

Le diamètre extérieur Ø45ext de la première zone de réception 45 de chaque élément d'assemblage 39 est inférieur au diamètre extérieur Ø24ext de la batterie 24.

Avantageusement, l'élément de maintien 42 de chaque support 37 est de forme convexe et, plus particulièrement, est en forme d'anneau ouvert ou de pince, de préférence à section circulaire.

Ici, l'élément de maintien 42 de chaque support 37 est défini par un diamètre intérieur Ø42int.

Avantageusement, dans la configuration assemblée du dispositif d'occultation 3, l'élément de maintien 42 de chaque support 37, donc son diamètre intérieur Ø42int, est centré sur l'axe longitudinal X24 de la batterie 24.

Avantageusement, le diamètre intérieur Ø42int de l'élément de maintien 42 est mesuré lorsque l'élément de maintien 42 n'est pas contraint par l'un des éléments d'assemblage 39, c'est-à-dire en l'absence de l'un des éléments d'assemblage 39 dans le volume défini par la deuxième surface 42a.

En outre, le diamètre intérieur Ø42int de l'élément de maintien 42 de chaque support 37 est inférieur au diamètre extérieur Ø24ext de la batterie 24.

Ainsi, la première zone de réception 45 de chaque élément d'assemblage 39 de la batterie 24 est logée à l'intérieur de l'élément de maintien 42 de l'un des supports 37, tout en garantissant que l'élément de maintien 42 de chacun des supports 37 ne dépasse pas ou peu par rapport à un volume d'enveloppe de la batterie 24, en particulier selon une direction radiale à l'axe longitudinal X24, de sorte à minimiser l'encombrement radial du dispositif de stockage d'énergie électrique 33 à l'intérieur du coffre 9 et à éloigner la batterie 24 par rapport à l'écran 2, lors de l'enroulement ou lors du déroulement de celui-ci autour du tube d'enroulement 4 à l'intérieur du coffre 9.

Ici, le volume d'enveloppe de la batterie 24 est égal à un cylindre, en particulier à section circulaire, centré sur l'axe longitudinal X24 et de diamètre égal au diamètre extérieur Ø24ext.

De cette manière, l'assemblage de la première zone de réception 45 de chacun des éléments d'assemblage 39 de la batterie 24 à l'intérieur de l'élément de maintien 42 de l'un des supports 37 permet de limiter, voire d'éviter, une surépaisseur de l'élément de maintien 39 de chacun des supports 37 par rapport au volume d'enveloppe de la batterie 24.

En outre, le dispositif de stockage d'énergie électrique 33 peut être installé dans un coffre 9 de dimensions plus faibles, en particulier en termes d'épaisseur E9 et de hauteur H9.

Par conséquent, le faible encombrement du dispositif de stockage d'énergie électrique 33 à l'intérieur du coffre 9 permet, d'une part, d'éviter un contact de l'écran 2 avec la batterie 24, lors de l'enroulement ou lors du déroulement de celui-ci autour du tube d'enroulement 4 à l'intérieur du coffre 9, et, d'autre part, de maximiser un diamètre d'enroulement Ø2 de l'écran 2 autour du tube d'enroulement 4 à l'intérieur du coffre 9. Un cercle de diamètre Ø2, qui délimite l'encombrement maximum de l'écran 2 à l'intérieur du coffre 9, est représenté par un trait en pointillés à la figure 4.

Par ailleurs, l'assemblage de la première zone de réception 45 de chacun des éléments d'assemblage 39 de la batterie 24 à l'intérieur de l'élément de maintien 42 de l'un des supports 37 permet de positionner la batterie 24 au plus près de l'un des angles 44a, 44b, 44c, 44d du coffre 9, de sorte à optimiser l'encombrement du dispositif de stockage d'énergie électrique 33 à l'intérieur du coffre 9 et à éloigner la batterie 24 par rapport à l'écran 2, lors de l'enroulement ou lors du déroulement de celui-ci autour du tube d'enroulement 4 à l'intérieur du coffre 9.

De préférence, la différence entre le diamètre extérieur Ø24ext de la batterie 24 et le diamètre intérieur Ø42int de l'élément de maintien 42 de chaque support 37 est supérieure ou égale au double d'une épaisseur de l'élément de maintien 42.

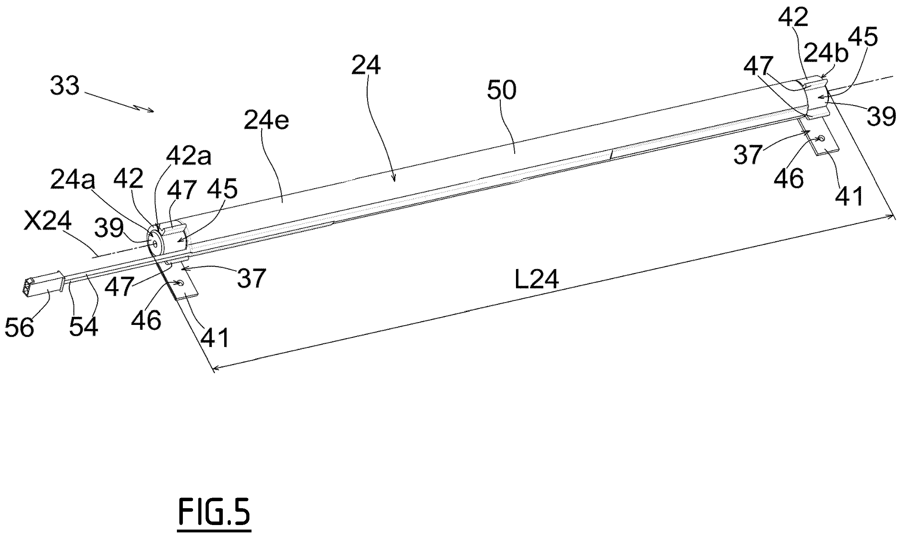

Dans l'exemple de réalisation illustré aux figures 4 et 5, l'assemblage de la première zone de réception 45 de chacun des éléments d'assemblage 39 de la batterie 24 à l'intérieur de l'élément de maintien 42 de l'un des supports 37 permet de positionner la batterie 24 au plus près de l'angle 44a du coffre 9.

En variante, non représentée, l'assemblage de la première zone de réception 45 de chacun des éléments d'assemblage 39 de la batterie 24 à l'intérieur de l'élément de maintien 42 de l'un des supports 37 permet de positionner la batterie 24 au plus près de l'angle 44b, de l'angle 44c ou de l'angle 44d du coffre 9.

Avantageusement, chaque support 37 et chaque élément d'assemblage 39 sont réalisés dans une matière plastique.

Ainsi, chaque support 37 et chaque élément d'assemblage 39 réalisés en matière plastique permettent d'éviter d'abîmer la batterie 24, lors de l'installation de celle-ci à l'intérieur du coffre 9, au moyen des supports 37 et des éléments d'assemblage 39, en particulier en comparaison à des supports et des éléments d'assemblage réalisés en métal, qui pourraient présenter des arêtes vives.

En outre, en cas de blessure de la batterie 24, lors de l'installation de celle-ci à l'intérieur du coffre 9, chaque support 37 et chaque élément d'assemblage 39 réalisés en matière plastique permettent d'éviter de créer un court-circuit dans la batterie 24, qui risquerait de générer une réaction chimique au niveau de ses éléments de stockage d'énergie électrique 32, 32a, 32b, puisque chaque support 37 et chaque élément d'assemblage 39 ne sont pas conducteurs du point de vue électrique.

Avantageusement, le diamètre extérieur Ø24ext de la batterie 24 est compris dans une plage de valeurs prédéterminée, la plage de valeurs prédéterminée étant définie entre une première valeur minimale et une deuxième valeur maximale.

Ainsi, chaque support 37 est compatible avec différentes valeurs de diamètre extérieur Ø24ext de la batterie 24, de sorte à être universel dans la plage de valeurs prédéterminée.

De cette manière, une seule référence de support 37 est développée et commercialisée pour les différentes références de batterie 24 développées et commercialisées destinées à être installées dans le coffre 9.

Avantageusement, la première valeur minimale de la plage est supérieure ou égale à dix millimètres, préférentiellement supérieure ou égale à treize millimètres, et la deuxième valeur maximale de la plage est inférieure ou égale à cinquante millimètres, préférentiellement inférieure ou égale à quarante millimètres.

A titre d'exemple nullement limitatif, la valeur du diamètre extérieur Ø24ext de la batterie 24 peut être de dix-sept millimètres ou de vingt-trois millimètres.

Ici et comme illustré à la figure 5, le dispositif de stockage d'énergie électrique 33 comprend deux supports 37 et la batterie 24 comprend deux éléments d'assemblage 39.

En variante, non représentée, le dispositif de stockage d'énergie électrique 33 comprend trois supports 37 ou plus et la batterie 24 comprend trois éléments d'assemblage 39 ou plus, notamment en fonction d'une longueur L24 de la batterie 24.

Avantageusement, le nombre de supports 37 est égal au nombre d'éléments d'assemblage 39.

Ainsi, les supports 37 et les éléments d'assemblage 39, respectivement au nombre de deux ou plus, permettent de garantir un alignement de la batterie 24 à l'intérieur du coffre 9 et, plus particulièrement, au plus proche de l'un des angles 44a, 44b, 44c, 44d du coffre 9.

Avantageusement, la longueur L9 du coffre 9 est supérieure ou égale à cent vingt-cinq millimètres, notamment lorsque la valeur du diamètre extérieur Ø24ext de la batterie 24 est de l'ordre de dix-sept millimètres.

Avantageusement, l'élément de maintien 42 de chaque support 37 est un élément de fixation par encliquetage élastique.

Ainsi, la fixation de chaque élément d'assemblage 39 avec l'un des supports 37 ne nécessite aucun outil.

Avantageusement, le diamètre intérieur Ø42int de l'élément de maintien 42 de chaque support 37 est inférieur ou égal au diamètre extérieur Ø45ext de la première zone de réception 45 de chaque élément d'assemblage 39.

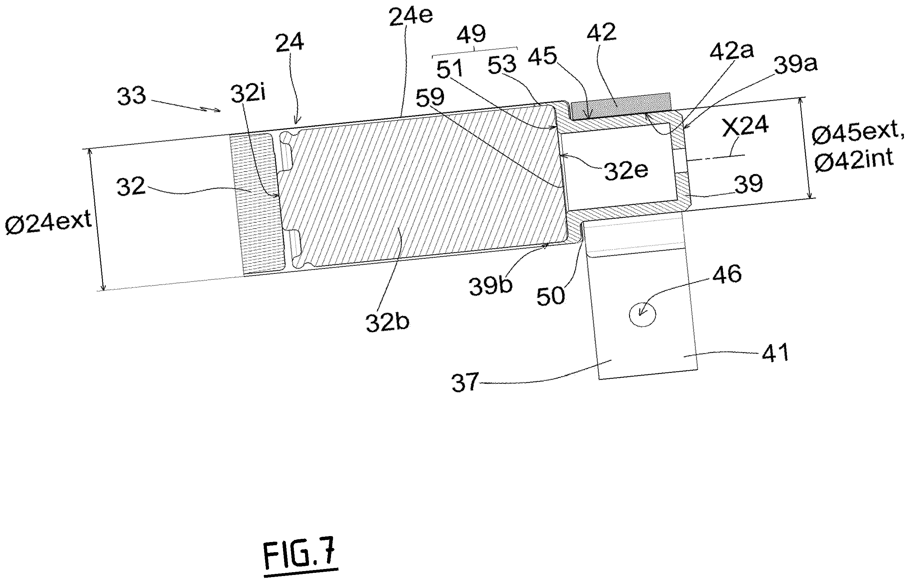

Ici et comme illustré à la figure 7, le diamètre intérieur Ø42int de l'élément de maintien 42 de chaque support 37 est égal au diamètre extérieur Ø45ext de la première zone de réception 45 de chaque élément d'assemblage 39.

Avantageusement, l'élément de maintien 42 de chaque support 37 comprend au moins un élément de guidage 47. En outre, le ou chaque élément de guidage 47 de l'élément de maintien 42 est configuré pour guider, autrement dit guide, l'un des éléments d'assemblage 39 à l'intérieur de l'élément de maintien 42, lors de l'assemblage de la batterie 24 sur chacun des supports 37.

Ici, l'élément de maintien 42 de chaque support 37 comprend deux éléments de guidage 47, en l'occurrence un élément de guidage 47 à chacune des extrémités de l'élément de maintien 42 en forme de pince. Un seul des éléments de maintien 42 de l'un des supports 37 est visible à la figure 4.

Dans ce cas, seuls les éléments de guidage 47 de l'élément de maintien 42 de chaque support 37 dépassent par rapport au volume d'enveloppe de la batterie 24, sans que l'encombrement du dispositif de stockage d'énergie électrique 33 à l'intérieur du coffre 9 ait une incidence sur le diamètre d'enroulement Ø2 de l'écran 2 autour du tube d'enroulement 4.

Avantageusement, chaque élément d'assemblage 39 comprend au moins une deuxième zone de réception 49. En outre, l'un des éléments de stockage d'énergie électrique 32, 32a, 32b, en l'occurrence l'un des éléments de stockage d'énergie électrique d'extrémité 32a, 32b dans ce premier mode de réalisation de l'invention, est assemblé, autrement dit est configuré pour être assemblé, sur l'un des éléments d'assemblage 39 au niveau de la deuxième zone de réception 49 de l'élément d'assemblage 39 concerné, en particulier dans la configuration assemblée de la batterie 24.

Ainsi, la deuxième zone de réception 49 de l'un des éléments d'assemblage 39 est configurée pour recevoir en appui, autrement dit reçoit en appui, l'un des éléments de stockage d'énergie électrique 32, 32a, 32b.

Ici, la ou chaque deuxième zone de réception 49 de chaque élément d'assemblage 39 comprend une concavité 51 et une collerette 53. En outre, une partie de l'un des éléments de stockage d'énergie électrique 32, 32a, 32b, en l'occurrence l'un des éléments de stockage d'énergie électrique d'extrémité 32a, 32b dans ce premier mode de réalisation de l'invention, est configuré pour être logé, autrement dit est logé, à l'intérieur de la concavité 51 et la collerette 53 est configurée pour recouvrir, autrement dit recouvre, une partie de l'un des éléments de stockage d'énergie électrique 32, 32a, 32b, en l'occurrence l'un des éléments de stockage d'énergie électrique d'extrémité 32a, 32b dans ce premier mode de réalisation de l'invention, en particulier dans la configuration assemblée de la batterie 24.

Avantageusement, chaque élément d'assemblage 39 comprend une première extrémité 39a et une deuxième extrémité 39b. La deuxième extrémité 39b est opposée à la première extrémité 39a.

Ici, chaque élément d'assemblage 39 comprend une seule deuxième zone de réception 49. En outre, la deuxième zone de réception 49 est ménagée au niveau de la deuxième extrémité 39b de l'élément d'assemblage 39.

Avantageusement, la batterie 24 comprend deux extrémités 24a, 24b, opposées l'une par rapport à l'autre.

Avantageusement, la pluralité d'éléments de stockage d'énergie électrique 32, 32a, 32b comprend un premier élément de stockage d'énergie électrique d'extrémité 32a et un deuxième élément de stockage d'énergie électrique d'extrémité 32b. Le deuxième élément de stockage d'énergie électrique d'extrémité 32b est opposé au premier élément de stockage d'énergie électrique d'extrémité 32a.

Le premier élément de stockage d'énergie électrique d'extrémité 32a et le deuxième élément de stockage d'énergie électrique d'extrémité 32b comprennent chacun une première face d'extrémité 32e et une deuxième face d'extrémité 32i. La première face d'extrémité 32e est orientée vers l'extérieur de la batterie 24. La deuxième face d'extrémité 32i est orientée vers l'intérieur de la batterie 24. Autrement dit, la deuxième face d'extrémité 32i est opposée à la première face d'extrémité 32e.

En outre, l'un des éléments d'assemblage 39 est en appui, autrement dit est configuré pour être en appui, contre la première face d'extrémité 32e du premier élément de stockage d'énergie électrique d'extrémité 32a et l'autre des éléments d'assemblage 39 est en appui, autrement dit est configuré pour être en appui, contre la première face d'extrémité 32e du deuxième élément de stockage d'énergie électrique d'extrémité 32b, en particulier dans la configuration assemblée de la batterie 24.

Ainsi, chacun des éléments d'assemblage 39 est disposé au niveau de l'une des extrémités 24a, 24b de la batterie 24.

Avantageusement, la batterie 24 comprend, en outre, au moins une gaine thermo-rétractable 50. En outre, chaque élément d'assemblage 39 est maintenu, autrement dit est configuré pour être maintenu, avec au moins l'un des éléments de stockage d'énergie électrique 32, 32a, 32b, en l'occurrence l'un des éléments de stockage d'énergie électrique d'extrémité 32a, 32b dans ce premier mode de réalisation de l'invention, au moyen de la gaine thermo-rétractable 50, en particulier dans la configuration assemblée de la batterie 24.

Ici, la batterie 24 comprend une seule gaine thermo-rétractable 50. En outre, l'ensemble des éléments de stockage d'énergie électrique 32, 32a, 32b de la batterie 24 sont maintenus ensemble par l'unique gaine thermo-rétractable 50. En outre, chacun des éléments d'assemblage 39, qui sont respectivement disposés au niveau de l'une des extrémités 24a, 24b de la batterie 24, sont maintenus avec l'un des premier et deuxième éléments de stockage d'énergie électrique d'extrémité 32a, 32b par l'unique gaine thermo-rétractable 50.

Avantageusement, la collerette 53 de la ou de chaque deuxième zone de réception 49 de chaque élément d'assemblage 39 est recouverte, autrement dit est configurée pour être recouverte, par la gaine thermo-rétractable 50, en particulier dans la configuration assemblée de la batterie 24.

Avantageusement, l'élément de fixation de chaque support 37 contre la première paroi 9a du coffre 9 est un élément de fixation par collage.

Ainsi, dans ce cas, la fixation de chaque support 37 contre la première paroi 9a du coffre 9 ne nécessite aucun outil.

En variante ou en complément, l'élément de fixation de chaque support 37 contre la première paroi 9a du coffre 9 est un élément de fixation par vissage ou par rivetage.

Avantageusement, dans le cas où la fixation de chaque support 37 contre la première paroi 9a du coffre 9 est mise en œuvre par vissage ou par rivetage, le bras 41 de chaque support 37 comprend un trou de passage 46.

Ainsi, le trou de passage 46 permet le passage d'une vis ou d'un rivet au travers du bras 41 de chaque support 37, de sorte à visser ou à riveter chaque support 37 contre la première paroi 9a du coffre 9.

Avantageusement, dans le cas où la fixation de chaque support 37 contre la première paroi 9a du coffre 9 est mise en œuvre par vissage ou par rivetage, la première paroi 9a du coffre 9 comprend un trou de vissage ou de rivetage, non représenté.

Ici, chaque support 37 peut être fixé contre la première paroi 9a du coffre 9 soit au moyen de l'élément de fixation par collage, soit au moyen de l'élément de fixation par vissage ou par rivetage, soit au moyen de l'élément de fixation par collage et de l'élément de fixation par vissage ou par rivetage.

Ici, l'élément de fixation par collage est un adhésif, en particulier un adhésif double face.

Dans le cas où l'élément de fixation par collage est un adhésif, celui-ci présente un opercule, non représenté, qui est à retirer lors de la mise en appui de la première surface 41a du bras 41 de l'un des supports 37 contre la surface intérieure 9ai de la première paroi 9a du coffre 9.

Dans le cas où la fixation de chaque support 37 contre la première paroi 9a du coffre 9 est mise en œuvre, d'une part, par collage, au moyen d'un adhésif, et, d'autre part, par vissage ou par rivetage, l'adhésif est percé préalablement au moyen d'un outil ou lors de l'insertion de la vis ou du rivet, au travers du trou de passage 46 du bras 41 du support 37.

Dans le cas où la fixation de chaque support 37 contre la première paroi 9a du coffre 9 peut être mise en œuvre soit par collage, soit par vissage, soit par rivetage, un installateur a le choix entre les trois possibilités.

Avantageusement, la batterie 24 est maintenue en position, autrement dit est configurée pour être maintenue en position, à l'intérieur du coffre 9, au moyen des supports 37 et des éléments d'assemblage 39, dans une position horizontale, autrement dit dans une position s'étendant suivant la longueur L9 du coffre 9, en particulier dans la configuration assemblée du dispositif d'occultation 3.

Ici, la position horizontale de la batterie 24 s'entend comme étant parallèle au sol et à l'axe de rotation X.

Le montage de la batterie 24 à l'intérieur du coffre 9 de ce dispositif d'occultation 3 est mis en œuvre en fixant chaque support 37 contre la première surface intérieure 9ai de la première paroi 9a du coffre 9, au moyen d'au moins un élément de fixation, par collage et/ou par vissage ou rivetage, puis, en assemblant chacun des éléments d'assemblage 39 de la batterie 24 avec l'un des éléments de maintien 42 de chaque support 37, en particulier par encliquetage élastique.

Avantageusement, la batterie 24 comprend, en outre, des fils d'alimentation électrique 54, en l'occurrence au nombre de deux. En outre, chacun des fils d'alimentation électrique 54 est relié électriquement à l'un des premier et deuxième éléments de stockage d'énergie électrique d'extrémité 32a, 32b.

Ainsi, un premier fil d'alimentation électrique 54 est relié électriquement au premier élément de stockage d'énergie électrique d'extrémité 32a et un deuxième fil d'alimentation électrique 54 est relié électriquement au deuxième élément de stockage d'énergie électrique d'extrémité 32b.

Avantageusement, les fils d'alimentation électrique 54 sont reliés électriquement à un connecteur électrique 56, de sorte, d'une part, à alimenter en énergie électrique l'actionneur électromécanique 11 et, d'autre part, à recharger en énergie électrique la batterie 24 soit par le panneau photovoltaïque 25, soit par un chargeur, soit par une batterie auxiliaire.

Avantageusement, le premier fil d'alimentation électrique 54 est relié électriquement au premier élément de stockage d'énergie électrique d'extrémité 32a, en particulier au niveau de la première face d'extrémité 32e du premier élément de stockage d'énergie électrique d'extrémité 32a, par l'intermédiaire d'une première bande conductrice 59. En outre, le deuxième fil d'alimentation électrique 54 est relié électriquement au deuxième élément de stockage d'énergie électrique d'extrémité 32b, en particulier au niveau de la première face d'extrémité 32e du deuxième élément de stockage d'énergie électrique d'extrémité 32b, par l'intermédiaire d'une deuxième bande conductrice 59.

Ici, les première et deuxième bandes conductrices 59 sont réalisées dans une matière métallique, telle que, par exemple, de l'acier, du cuivre ou du laiton, présentent une surface plane de forme rectangulaire et sont coudées, de sorte à être en contact électrique avec une borne du premier ou du deuxième élément de stockage d'énergie électrique d'extrémité 32a, 32b.

Avantageusement, le premier fil d'alimentation électrique 54 est relié électriquement à la première bande conductrice 59 par une soudure. De même, le deuxième fil d'alimentation électrique 54 est relié électriquement à la deuxième bande conductrice 59 par une soudure.

Avantageusement, les première et deuxième bandes conductrices 59 sont maintenues en position à l'intérieur de la gaine thermo-rétractable 50, en particulier dans la configuration assemblée de la batterie 24.

Avantageusement, la batterie 24 comprend, en outre, un organe de sécurité, non représenté. En outre, l'organe de sécurité est disposé, autrement dit est configuré pour être disposé, entre la deuxième zone de réception 49 de l'un des éléments d'assemblage 39 et le premier ou le deuxième élément de stockage d'énergie électrique d'extrémité 32a, 32b assemblé contre l'élément d'assemblage 39 concerné, en particulier dans la configuration assemblée de la batterie 24.

Ainsi, l'élément d'assemblage 39 permet de protéger l'organe de sécurité, notamment lors de la manipulation de la batterie 24.

Avantageusement, l'organe de sécurité est disposé au niveau de la deuxième extrémité 24b de la batterie 24, autrement dit au niveau d'une sortie électrique de la batterie 24.

Ici, l'organe de sécurité est un interrupteur électronique permettant de protéger électriquement la batterie 24 d'un court-circuit des éléments de stockage d'énergie électrique 32, 32a, 32b, de sorte à éviter un échauffement de ceux-ci pouvant provoquer une réaction chimique.

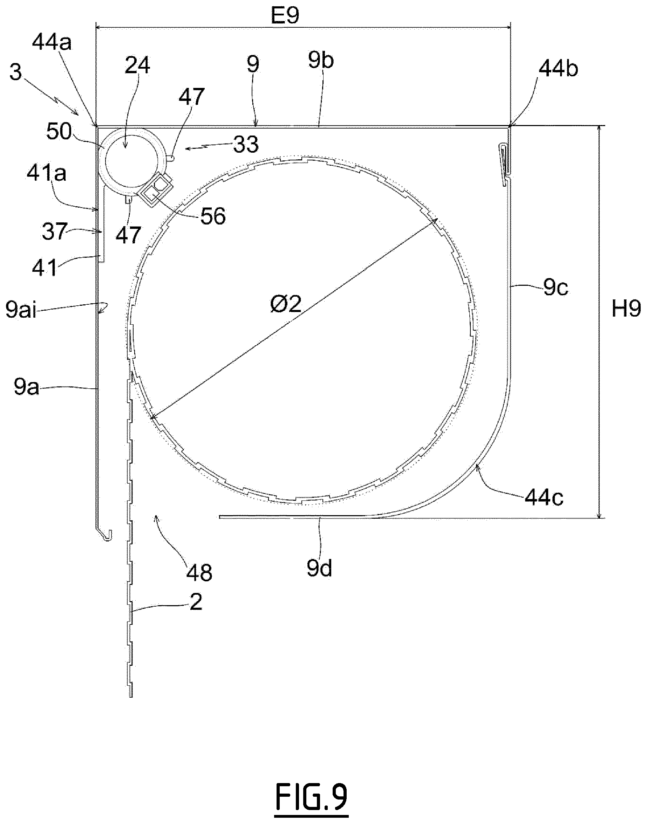

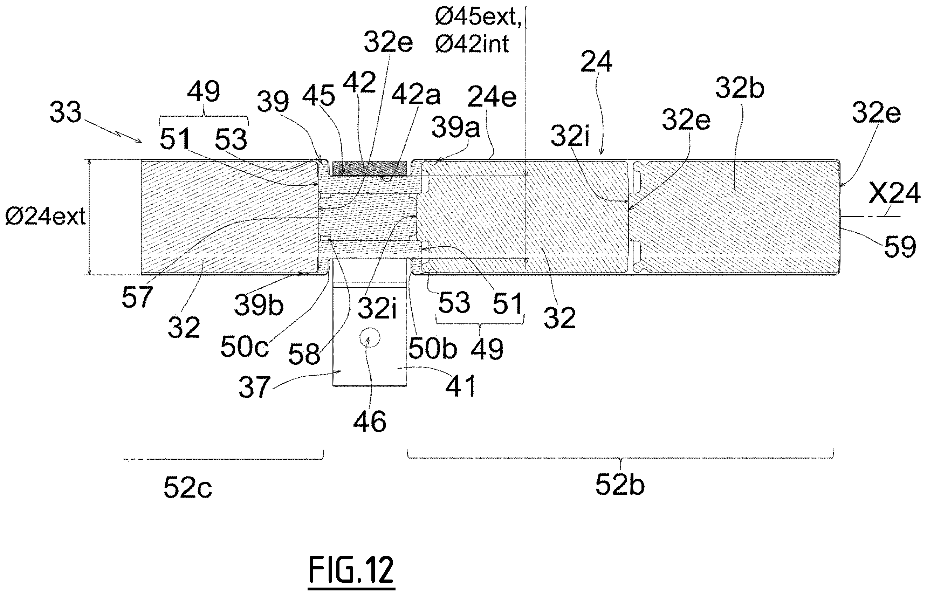

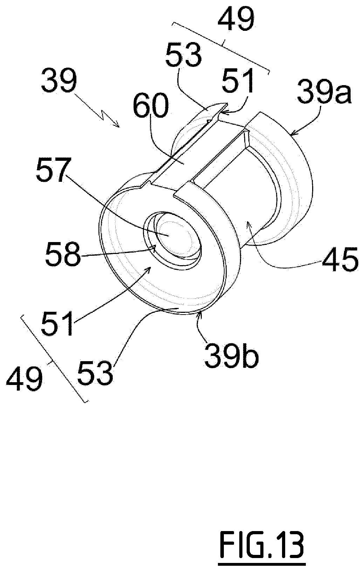

Dans le deuxième mode de réalisation, représenté aux figures 9 à 13, les éléments analogues à ceux du premier mode de réalisation portent les mêmes références et fonctionnent comme expliqué ci-dessus. Dans ce qui suit, on décrit, principalement, que ce qui distingue ce deuxième mode de réalisation du précédent. Dans ce qui suit, lorsqu'un signe de référence est utilisé dans la description sans être reproduit sur les figures 9 à 13 ou reproduit sur les figures 9 à 13 sans être mentionné dans la description, il correspond à l'objet portant la même référence sur l'une des figures 1 à 8.

On décrit maintenant, en référence aux figures 9 à 13, le dispositif d'occultation 3 selon le deuxième mode de réalisation de l'invention et, plus particulièrement, le dispositif de stockage d'énergie électrique 33.

Ici, chaque élément d'assemblage 39 comprend deux deuxièmes zones de réception 49. En outre, une première deuxième zone de réception 49 est ménagée au niveau de la première extrémité 39a de l'élément d'assemblage 39 et une deuxième zone de réception 49 est ménagée au niveau de la deuxième extrémité 39b de l'élément d'assemblage 39.

Ici, chaque élément d'assemblage 39 est disposé entre deux éléments de stockage d'énergie électrique 32, 32a, 32b adjacents, pouvant également être appelés voisins. Chaque élément de stockage d'énergie électrique 32, 32a, 32b est défini, le long de l'axe longitudinal X24, entre une première face d'extrémité 32e et une deuxième face d'extrémité 32i. La deuxième face d'extrémité 32i est opposée à la première face d'extrémité 32e.

En outre, chaque élément d'assemblage 39 est en appui, autrement dit est configuré pour être en appui, d'une part, contre la première face d'extrémité 32e de l'un des éléments de stockage d'énergie électrique 32, 32a, 32b adjacents et, d'autre part, contre la deuxième face d'extrémité 32i de l'autre des éléments de stockage d'énergie électrique 32, 32a, 32b adjacents.

Ainsi, chacun des éléments d'assemblage 39 est disposé entre deux éléments de stockage d'énergie électrique 32, 32a, 32b adjacents de la batterie 24, autrement dit chacun des éléments d'assemblage 39 n'est pas disposé au niveau de l'une des extrémités 24a, 24b de la batterie 24.

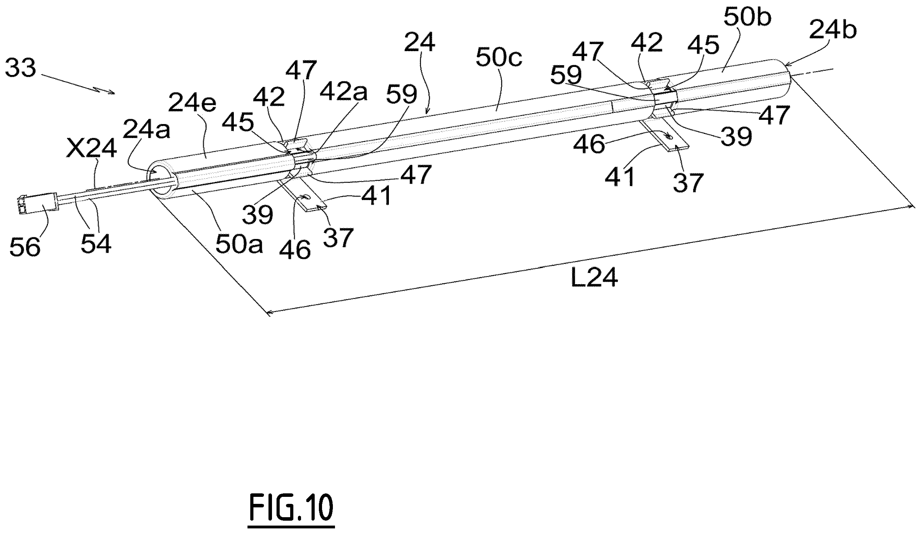

Ici et comme illustré à la figure 10, le dispositif de stockage d'énergie électrique 33 comprend également deux supports 37 et la batterie 24 comprend également deux éléments d'assemblage 39.

Ici, les deux supports 37 sont identiques. La description suivante d'un support s'applique à l'un ou l'autre de ces deux supports 37. De même, les deux éléments d'assemblage 39 sont identiques. La description suivante d'un élément d'assemblage s'applique à l'un ou l'autre de ces deux éléments d'assemblage 39.

Ici, la batterie 24 comprend plusieurs gaines thermo-rétractable 50a, 50b, 50c, en l'occurrence au nombre de trois.

Un premier sous-ensemble 52a est constitué du premier élément de stockage d'énergie électrique d'extrémité 32a et, éventuellement, d'un ou plusieurs autres éléments de stockage d'énergie électrique 32. Le premier élément de stockage d'énergie électrique d'extrémité 32a et, éventuellement, le ou les autres éléments de stockage d'énergie électrique 32 du premier sous-ensemble 52a sont maintenus ensemble par une première gaine thermo-rétractable 50a.

Un deuxième sous-ensemble 52b est constitué du deuxième élément de stockage d'énergie électrique d'extrémité 32b et, éventuellement, d'un ou plusieurs autres éléments de stockage d'énergie électrique 32. Le deuxième élément de stockage d'énergie électrique d'extrémité 32b et, éventuellement, le ou les autres éléments de stockage d'énergie électrique 32 du deuxième sous-ensemble 52b sont maintenus ensemble par une deuxième gaine thermo-rétractable 50b.

Un troisième sous-ensemble 52c est constitué d'un ou plusieurs éléments de stockage d'énergie électrique 32 disposés entre les premier et deuxième sous-ensembles 52a, 52b. Le ou les autres éléments de stockage d'énergie électrique 32 du troisième sous-ensemble 52c sont maintenus ensemble par une troisième gaine thermo-rétractable 50c.

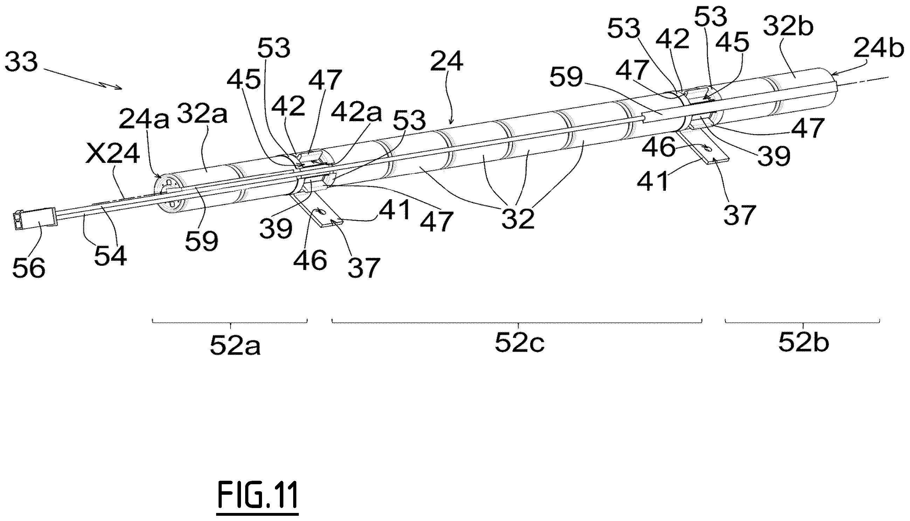

Un premier élément d'assemblage 39 est disposé entre le premier sous-ensemble 52a et le troisième sous-ensemble 52c, comme visible à la figure 11. En outre, le premier élément d'assemblage 39 est maintenu, d'une part, avec l'un des éléments de stockage d'énergie électrique 32a, 32 du premier sous-ensemble 52a par la première gaine thermo-rétractable 50a et, d'autre part, avec l'un des éléments de stockage d'énergie électrique 32 du troisième sous-ensemble 52c par la troisième gaine thermo-rétractable 50c.

Un deuxième élément d'assemblage 39 est disposé entre le deuxième sous-ensemble 52b et le troisième sous-ensemble 52c, comme visible à la figure 11. En outre, le deuxième élément d'assemblage 39 est maintenu, d'une part, avec l'un des éléments de stockage d'énergie électrique 32b, 32 du deuxième sous-ensemble 52b par la deuxième gaine thermo-rétractable 50b et, d'autre part, avec l'un des éléments de stockage d'énergie électrique 32 du troisième sous-ensemble 52c par la troisième gaine thermo-rétractable 50c.

Ici, chaque élément d'assemblage 39 comprend un élément de connexion électrique 57. En outre, l'élément de connexion électrique 57 est connecté électriquement avec les deux éléments de stockage d'énergie électrique 32, 32a, 32b adjacents à l'élément d'assemblage 39 concerné.

Ainsi, les deux éléments de stockage d'énergie électrique 32, 32a, 32b adjacents de la batterie 24 entre lesquels est disposé l'un des éléments d'assemblage 39 sont reliés électriquement ensemble, comme les autres éléments de stockage d'énergie électrique 32, 32a, 32b adjacents de la batterie 24 entre lesquels n'est disposé aucun élément d'assemblage 39, seules leurs bornes étant en contact électrique.

Ici, l'élément de connexion électrique 57 est disposé dans un trou central 38 de l'élément d'assemblage 39. En outre, l'élément de connexion électrique 57 présente une forme semblable à celle de l'un des éléments de stockage d'énergie électrique 32, 32a, 32b, mais de dimensions réduites par rapport aux éléments de stockage d'énergie électrique 32, 32a, 32b.

Ici, chaque élément d'assemblage 39 comprend au moins une zone de guidage 60. En outre, la zone de guidage 60 est configurée pour maintenir en position, autrement dit maintient en position, l'une des première et deuxième bandes conductrices planes 59, en particulier dans la configuration assemblée de la batterie 24.

Dans cet exemple de réalisation, la zone de guidage 60 est réalisée sous la forme d'une rainure longitudinale ménagée dans l'élément d'assemblage 39.

Grâce à la présente invention, quel que soit le mode de réalisation, la première zone de réception de chaque élément d'assemblage de la batterie est logée à l'intérieur de l'élément de maintien de l'un des supports, tout en garantissant que l'élément de maintien de chacun des supports ne dépasse pas ou peu par rapport à un volume d'enveloppe de la batterie, de sorte à minimiser l'encombrement radial du dispositif de stockage d'énergie électrique à l'intérieur du coffre et à éloigner la batterie par rapport à l'écran, lors de l'enroulement ou lors du déroulement de celui-ci autour du tube d'enroulement à l'intérieur du coffre.

De cette manière, l'assemblage de la première zone de réception de chacun des éléments d'assemblage de la batterie à l'intérieur de l'élément de maintien de l'un des supports permet de limiter, voire d'éviter, une surépaisseur de l'élément de maintien de chacun des supports par rapport au volume d'enveloppe de la batterie.

De nombreuses modifications peuvent être apportées aux exemples de réalisation décrits précédemment, sans sortir du cadre de l'invention défini par les revendications.

En variante, non représentée, l'assemblage des éléments de stockage d'énergie électrique 32, 32a, 32b avec les éléments d'assemblage 39 peut être mis en oeuvre en combinant les premier et deuxième modes de réalisation, c'est-à-dire que l'un des éléments d'assemblage 39 est disposé au niveau de l'une des extrémités 24a, 24b de la batterie 24 et que l'autre des éléments d'assemblage 39 est disposé entre deux éléments de stockage d'énergie électrique 32, 32a, 32b adjacents.

En variante, non représentée, chaque élément d'assemblage 39 de la batterie 24 et l'élément de maintien 42 de chaque support 37 sont décentrés par rapport à l'axe longitudinal X24 de la batterie 24. Dans ce cas, le diamètre extérieur Ø45ext de la première zone de réception 45 de chaque élément d'assemblage 39 et le diamètre intérieur Ø42int de l'élément de maintien 42 de chaque support 37 ne sont pas centrés sur l'axe longitudinal X24 de la batterie 24.

En variante, non représentée, le dispositif d'alimentation en énergie électrique 26 comprend, en outre, un chargeur. Ce chargeur est configuré pour être branché, autrement dit est branché, sur une prise électrique murale, de sorte à recharger la batterie 24 à partir d'un réseau d'alimentation électrique du secteur. Ce chargeur forme une source d'alimentation en énergie électrique externe.

En variante, non représentée, le dispositif d'alimentation en énergie électrique 26 comprend, en outre, une batterie auxiliaire, la batterie auxiliaire étant configurée pour recharger la batterie 24. Ainsi, la batterie 24 peut être rechargée au moyen de la batterie auxiliaire formant une source d'alimentation en énergie électrique externe, en particulier dans le cas où le dispositif d'occultation 3 est éloigné d'une prise électrique murale. En outre, la batterie auxiliaire peut permettre de recharger une batterie d'autres équipements électriques, notamment nomades, tels que, par exemple, un téléphone portable ou un ordinateur portable. Par ailleurs, une telle batterie auxiliaire, peut présenter au moins deux sorties électriques, en particulier une première sortie délivrant une tension de 12 volts pour alimenter en énergie électrique la batterie 24 et une deuxième sortie délivrant une tension de 5 volts pour alimenter en énergie électrique d'autres équipements électriques, dits nomades.

En outre, les modes de réalisation et variantes envisagés peuvent être combinés pour générer de nouveaux modes de réalisation de l'invention, sans sortir du cadre de l'invention défini par les revendications.

## Revendications

1. Dispositif d'occultation (3) comprenant au moins :
- un coffre (9),
- un écran (2),
- un tube d'enroulement (4), l'écran (2) étant enroulable sur le tube d'enroulement (4), le tube d'enroulement (4) étant disposé à l'intérieur du coffre (9), et
- un dispositif de stockage d'énergie électrique (33),
le coffre (9) comprenant au moins :
- une première paroi (9a), la première paroi (9a) comprenant au moins une première surface intérieure (9ai),
le dispositif de stockage d'énergie électrique (33) comprenant au moins :
- une batterie (24), la batterie (24) étant cylindrique et étant disposée à l'intérieur du coffre (9), et
- deux supports (37), chaque support (37) étant fixé contre la première surface intérieure (9ai) de la première paroi (9a) du coffre (9), au moyen d'au moins un élément de fixation, et chaque support (37) maintenant en position la batterie (24) à l'intérieur du coffre (9),
la batterie (24) comprenant au moins :
- une pluralité d'éléments de stockage d'énergie électrique (32, 32a, 32b), et
- au moins deux éléments d'assemblage (39), chaque élément d'assemblage (39) comprenant au moins une première zone de réception (45),
chaque support (37) comprenant au moins :
- un élément de maintien (42), l'élément de maintien (42) de chaque support (37) étant assemblé avec l'un des éléments d'assemblage (39) au niveau de la première zone de réception (45) dudit élément d'assemblage (39),
**caractérisé**
**en ce que** la première zone de réception (45) de chaque élément d'assemblage (39) présente un diamètre extérieur (Ø45ext) inférieur à un diamètre extérieur (Ø24ext) de la batterie (24),
**en ce que** l'élément de maintien (42) de chaque support (37) présente un diamètre intérieur (Ø42int) inférieur au diamètre extérieur (Ø24ext) de la batterie (24),
et **en ce que** chaque élément d'assemblage (39) est en appui contre au moins l'un des éléments de stockage d'énergie électrique (32, 32a, 32b) de la batterie (24) suivant un axe longitudinal (X24) de la batterie (24).

2. Dispositif d'occultation (3) selon la revendication 1, **caractérisé en ce que** chaque élément d'assemblage (39) comprend au moins une deuxième zone de réception (49), l'un des éléments de stockage d'énergie électrique (32, 32a, 32b) étant assemblé sur l'un des éléments d'assemblage (39) au niveau de la deuxième zone de réception (49) dudit élément d'assemblage (39).

3. Dispositif d'occultation (3) selon la revendication 1 ou selon la revendication 2, **caractérisé**
**en ce que** la batterie (24) comprend, en outre, au moins une gaine thermo-rétractable (50 ; 50a, 50b, 50c),
et **en ce que** chaque élément d'assemblage (39) est maintenu avec au moins l'un des éléments de stockage d'énergie électrique (32, 32a, 32b) au moyen de la gaine thermo-rétractable (50 ; 50a, 50b, 50c).

4. Dispositif d'occultation (3) selon l'une quelconque des revendications 1 à 3, **caractérisé en ce que** la pluralité d'éléments de stockage d'énergie électrique (32, 32a, 32b) comprend au moins :
- un premier élément de stockage d'énergie électrique d'extrémité (32a), le premier élément de stockage d'énergie électrique d'extrémité (32a) comprenant au moins une première face d'extrémité (32e), la première face d'extrémité (32e) étant orientée vers l'extérieur de la batterie (24), et
- un deuxième élément de stockage d'énergie électrique d'extrémité (32b), le deuxième élément de stockage d'énergie électrique d'extrémité (32b) étant opposé au premier élément de stockage d'énergie électrique d'extrémité (32a), le deuxième élément de stockage d'énergie électrique d'extrémité (32b) comprenant au moins une première face d'extrémité (32e), la première face d'extrémité (32e) étant orientée vers l'extérieur de la batterie (24),
et **en ce que** l'un des éléments d'assemblage (39) est en appui contre la première face d'extrémité (32e) du premier élément de stockage d'énergie électrique d'extrémité (32a) et l'autre des éléments d'assemblage (39) est en appui contre la première face d'extrémité (32e) du deuxième élément de stockage d'énergie électrique d'extrémité (32b).

5. Dispositif d'occultation (3) selon l'une quelconque des revendications 1 à 3, **caractérisé en ce que** chacun des éléments de stockage d'énergie électrique (32, 32a, 32b) comprend une première face d'extrémité (32e) et une deuxième face d'extrémité (32i), **en ce que** chaque élément d'assemblage (39) est disposé entre deux éléments de stockage d'énergie électrique (32, 32a, 32b) adjacents,
et **en ce que** chaque élément d'assemblage (39) est en appui, d'une part, contre la première face d'extrémité (32e) de l'un des éléments de stockage d'énergie électrique (32, 32a, 32b) adjacents et, d'autre part, contre la deuxième face d'extrémité (32i) de l'autre des éléments de stockage d'énergie électrique (32, 32a, 32b) adjacents.

6. Dispositif d'occultation (3) selon la revendication 5, **caractérisé en ce que** chaque élément d'assemblage (39) comprend au moins un élément de connexion électrique (57), l'élément de connexion électrique (57) étant connecté électriquement avec les deux éléments de stockage d'énergie électrique (32, 32a, 32b) adjacents.

7. Dispositif d'occultation (3) selon l'une quelconque des revendications 1 à 6, **caractérisé en ce que** l'élément de maintien (42) de chaque support (37) est un élément de fixation par encliquetage élastique.

8. Dispositif d'occultation (3) selon l'une quelconque des revendications 1 à 7, **caractérisé en ce que** le dispositif d'occultation (3) comprend, en outre, au moins un dispositif d'entraînement motorisé (5),
**en ce que** le dispositif d'entraînement motorisé (5) comprend au moins un actionneur électromécanique (11),
**en ce que** l'actionneur électromécanique (11) comprend au moins un moteur électrique (16), le moteur électrique (16) étant alimenté en énergie électrique à partir de la batterie (24),
et **en ce que** le tube d'enroulement (4) est agencé de sorte à être entraîné en rotation par l'actionneur électromécanique (11).

9. Dispositif d'occultation (3) selon l'une quelconque des revendications 1 à 8, **caractérisé en ce que** le dispositif d'occultation (3) comprend, en outre, au moins un panneau photovoltaïque (25), la batterie (24) étant alimentée en énergie électrique au moyen du panneau photovoltaïque (25).

10. Dispositif d'occultation (3) selon l'une quelconque des revendications 1 à 9, **caractérisé en ce que**, dans une configuration assemblée du dispositif d'occultation (3), le diamètre extérieur (Ø45ext) de la première zone de réception (45) de chaque élément d'assemblage (39) et le diamètre intérieur (Ø42int) de l'élément de maintien (42) de chaque support (37) est centré sur l'axe longitudinal (X24) de la batterie (24).

## Patentansprüche

1. Verdunkelungsvorrichtung (3), mindestens umfassend:
- einen Kasten (9),
- einen Schirm (2),
- ein Wickelrohr (4), wobei der Schirm (2) auf das Wickelrohr (4) aufrollbar ist, wobei das Wickelrohr (4) im Inneren des Kastens (9) angeordnet ist, und
- eine Speichervorrichtung elektrischer Energie (33),
wobei der Kasten (9) mindestens Folgendes umfasst:
- eine erste Wand (9a), die erste Wand (9a) umfassend mindestens eine erste Innenfläche (9ai),
die Speichervorrichtung elektrischer Energie (33) mindestens umfassend:
- eine Batterie (24), wobei die Batterie (24) zylindrisch ist und im Inneren des Kastens (9) angeordnet ist, und
- zwei Halterungen (37), wobei jede Halterung (37) mittels mindestens eines Befestigungselements an der ersten Innenfläche (9ai) der ersten Wand (9a) des Kastens (9) befestigt ist und jede Halterung (37) die Batterie (24) innerhalb des Kastens (9) in Position hält,
die Batterie (24) mindestens umfassend:
- eine Vielzahl von Speicherelementen elektrischer Energie (32, 32a, 32b), und
- mindestens zwei Verbindungselemente (39), wobei jedes Verbindungselement (39) mindestens einen ersten Aufnahmebereich (45) umfasst,
jede Halterung (37) mindestens umfassend:
- ein Halteelement (42), wobei das Halteelement (42) jeder Halterung (37) mit einem der Verbindungselemente (39) an dem ersten Aufnahmebereich (45) des Verbindungselements (39) verbunden ist,
**dadurch gekennzeichnet,**
**dass** der erste Aufnahmebereich (45) jedes Verbindungselements (39) einen Außendurchmesser (Ø45ext) aufweist, der kleiner ist als ein Außendurchmesser (Ø24ext) der Batterie (24),
**dass** das Halteelement (42) jeder Halterung (37) einen Innendurchmesser (Ø42int) aufweist, der kleiner ist als der Außendurchmesser (Ø24ext) der Batterie (24),
und **dass** jedes Verbindungselement (39) entlang einer Längsachse (X24) der Batterie (24) an mindestens einem der Speicherelemente elektrischer Energie (32, 32a, 32b) der Batterie (24) anliegt.

2. Verdunkelungsvorrichtung (3) nach Anspruch 1, **dadurch gekennzeichnet, dass** jedes Verbindungselement (39) mindestens einen zweiten Aufnahmebereich (49) umfasst, wobei eines der Speicherelemente elektrischer Energie (32, 32a, 32b) an einem der Verbindungselemente (39) auf Ebene des zweiten Aufnahmebereichs (49) des Verbindungselements (39) montiert ist.

3. Verdunkelungsvorrichtung (3) nach Anspruch 1 oder Anspruch 2, **dadurch gekennzeichnet,**
**dass** die Batterie (24) ferner mindestens einen Wärmeschrumpfschlauch (50; 50a, 50b, 50c) umfasst,
und **dass** jedes Verbindungselement (39) mit mindestens einem der Speicherelemente elektrischer Energie (32, 32a, 32b) mittels des Wärmeschrumpfschlauchs (50; 50a, 50b, 50c) gehalten wird.

4. Verdunkelungsvorrichtung (3) nach einem der Ansprüche 1 bis 3, **dadurch gekennzeichnet, dass** die Vielzahl von Speicherelementen elektrischer Energien (32, 32a, 32b) mindestens Folgendes umfasst:
- ein erstes endseitiges Speicherelement elektrischer Energie (32a), wobei das erste endseitigeSpeicherelement elektrischer Energie (32a) mindestens eine erste Endfläche (32e) umfasst, wobei die erste Endfläche (32e) zu der Außenseite der Batterie (24) gerichtet ist, und
- ein zweites endseitiges Speicherelement elektrischer Energie (32b), wobei das zweite endseitige Speicherelement elektrischer Energie (32b) dem ersten endseitigen elektrischen Energiespeicherelement (32a) gegenüberliegt, wobei das zweite endseitige Speicherelement elektrischer Energie (32b) mindestens eine erste Endfläche (32e) umfasst, wobei die erste Endfläche (32e) zu der Außenseite der Batterie (24) hin gerichtet ist,
und dass eines der Verbindungselemente (39) an der ersten Endfläche (32e) des ersten endseitigen Speicherelements elektrischer Energie (32a) anliegt und das andere der Verbindungselemente (39) an der ersten Endfläche (32e) des zweiten endseitigen Speicherelements elektrischer Energie (32b) anliegt.

5. Verdunkelungsvorrichtung (3) nach einem der Ansprüche 1 bis 3, **dadurch gekennzeichnet, dass** jedes der Speicherelemente elektrischer Energie (32, 32a, 32b) eine erste Endfläche (32e) und eine zweite Endfläche (32i) umfasst, dass jedes Verbindungselement (39) zwischen zwei benachbarten Speicherelemente elektrischer Energien (32, 32a, 32b) angeordnet ist,
und dadurch, dass jedes Verbindungselement (39) einerseits an der ersten Endfläche (32e) eines der benachbarten Speicherelemente elektrischer Energie (32, 32a, 32b) und andererseits an der zweiten Endfläche (32i) des anderen der benachbarten Speicherelemente elektrischer Energie (32, 32a, 32b) anliegt.

6. Verdunkelungsvorrichtung (3) nach Anspruch 5, **dadurch gekennzeichnet, dass** jedes Verbindungselement (39) mindestens ein elektrisches Verbindungselement (57) umfasst, wobei das elektrische Verbindungselement (57) elektrisch mit den zwei benachbarten Speicherelemente elektrischer Energien (32, 32a, 32b) verbunden ist.

7. Verdunkelungsvorrichtung (3) nach einem der Ansprüche 1 bis 6, **dadurch gekennzeichnet, dass** das Halteelement (42) jeder Halterung (37) ein elastisches Rastbefestigungselement ist.

8. Verdunkelungsvorrichtung (3) nach einem der Ansprüche 1 bis 7, **dadurch gekennzeichnet, dass** die Verdunkelungsvorrichtung (3) ferner mindestens eine motorisierte Antriebsvorrichtung (5) umfasst,
dass die motorisierte Antriebsvorrichtung (5) mindestens einen elektromechanischen Aktuator (11) umfasst,
dass der elektromechanische Aktuator (11) mindestens einen Elektromotor (16) umfasst, wobei der Elektromotor (16) von der Batterie (24) mit elektrischer Energie versorgt wird,
wobei das Wickelrohr (4) angeordnet ist, um durch den elektromechanischen Aktuator (11) in Drehung versetzt zu werden.

9. Verdunkelungsvorrichtung (3) nach einem der Ansprüche 1 bis 8, **dadurch gekennzeichnet, dass** die Verdunkelungsvorrichtung (3) zusätzlich mindestens ein Solarpanel (25) umfasst, wobei die Batterie (24) mittels des Solarpanels (25) mit elektrischer Energie versorgt wird.

10. Verdunkelungsvorrichtung (3) nach einem der Ansprüche 1 bis 9, **dadurch gekennzeichnet, dass** der Außendurchmesser (Ø45ext) des ersten Aufnahmebereichs (45) jedes Verbindungselements (39) und der Innendurchmesser (Ø42int) des Halteelements (42) jeder Halterung (37) in einer zusammengebauten Konfiguration der Verdunkelungsvorrichtung (3) auf der Längsachse (X24) der Batterie (24) zentriert ist.

## Claims

1. A screening device (3) comprising at least:
- a box (9),
- a screen (2),
- a winding tube (4), the screen (2) being windable on the winding tube (4), the winding tube (4) being arranged inside the box (9), and
- an electrical energy storage device (33),
the box (9) comprising at least:
- a first wall (9a), the first wall (9a) comprising at least a first inner surface (9ai),
the electrical energy storage device (33) comprising at least:
- a battery (24), the battery (24) being cylindrical and arranged inside the box (9), and
- two supports (37), each support (37) being fastened against the first inner surface (9ai) of the first wall (9a) of the box (9), by means of at least one fastening element, and each support (37) holding the battery (24) in position inside the box (9),
the battery (24) comprising at least:
- a plurality of electrical energy storage elements (32, 32a, 32b), and
- at least two joining elements (39), each joining element (39) comprising at least a first receiving zone (45),
each support (37) comprising at least:
- a retaining element (42), the retaining element (42) of each support (37) being assembled to one of the joining elements (39) at the first receiving zone (45) of said joining element (39),
**characterized**
**in that** the first receiving zone (45) of each joining element (39) has an outer diameter (Ø45ext) smaller than an outer diameter (Ø24ext) of the battery (24),
**in that** the retaining element (42) of each support (37) has an inner diameter (Ø42int) smaller than the outer diameter (Ø24ext) of the battery (24),
and **in that** each joining element (39) bears against at least one of the electrical energy storage elements (32, 32a, 32b) of the battery (24) along a longitudinal axis (X24) of the battery (24).

2. The screening device (3) according to claim 1, **characterized in that** each joining element (39) comprises at least one second receiving zone (49), one of the electrical energy storage elements (32, 32a, 32b) being assembled on one of the joining elements (39) at the second receiving zone (49) of the said joining element (39).

3. The screening device (3) according to claim 1 or according to claim 2, **characterized in that** the battery (24) further comprises at least one heat-shrinkable sheath (50; 50a, 50b, 50c),
and **in that** each joining element (39) is held with at least one of the electrical energy storage elements (32, 32a, 32b) by means of the heat-shrinkable sheath (50; 50a, 50b, 50c).

4. The screening device (3) according to any one of claims 1 to 3, **characterized in that** the plurality of electrical energy storage elements (32, 32a, 32b) comprises at least:
- a first end electrical energy storage element (32a), the first end electrical energy storage element (32a) comprising at least one first end face (32e), the first end face (32e) facing outwards from the battery (24), and
- a second end electrical energy storage element (32b), the second end electrical energy storage element (32b) being opposite the first end electrical energy storage element (32a), the second end electrical energy storage element (32b) comprising at least one first end face (32e), the first end face (32e) facing outwards from the battery (24),
and **in that** one of the joining elements (39) bears against the first end face (32e) of the first end electrical energy storage element (32a) and the other of the joining element (39) bears against the first end face (32e) of the second end electrical energy storage element (32b).

5. The screening device (3) according to any one of claims 1 to 3, **characterized**
**in that** each of the electrical energy storage elements (32, 32a, 32b) comprises a first end face (32e) and a second end face (32i),
**in that** each joining element (39) is arranged between two adjacent electrical energy storage elements (32, 32a, 32b),
and **in that** each joining element (39) bears, on the one hand, against the first end face (32e) of one of the adjacent electrical energy storage elements (32, 32a, 32b) and, on the other hand, against the second end face (32i) of the other of the adjacent electrical energy storage elements (32, 32a, 32b).

6. The screening device (3) according to claim 5, **characterized in that** each joining element (39) comprises at least one electrical connection element (57), the electrical connection element (57) being electrically connected with the two adjacent electrical energy storage elements (32, 32a, 32b).

7. The screening device (3) according to any one of claims 1 to 6, **characterized in that** the retaining element (42) of each support (37) is an elastic snap-fastening element.

8. The screening device (3) according to any one of claims 1 to 7, **characterized**
**in that** the screening device (3) further comprises at least one motorized driving device (5),
**in that** the motorized driving device (5) comprises at least one electromechanical actuator (11),
**in that** the electromechanical actuator (11) comprises at least one electric motor (16), the electric motor (16) being supplied with electrical energy from the battery (24),
and **in that** the winding tube (4) is arranged to be rotated by the electromechanical actuator (11).

9. The screening device (3) according to any one of claims 1 to 8, **characterized in that** the screening device (3) further comprises at least one photovoltaic panel (25), the battery (24) being supplied with electrical energy by means of the photovoltaic panel (25).

10. The screening device (3) according to any one of claims 1 to 9, **characterized in that**, in an assembled configuration of the screening device (3), the outer diameter (Ø45ext) of the first receiving zone (45) of each joining element (39) and the inner diameter (Ø42int) of the retaining element (42) of each support (37) is centred on the longitudinal axis (X24) of the battery (24).
